# EUROPEAN PATENT APPLICATION

(11) **EP 4 270 726 A1**
(43) Date of publication of application: **01.11.2023**
(21) Application number: 23166054.9
(22) Date of filing: 31.03.2023
(51) Int. Cl.: H02J 7/34, H02J 7/00

(54) **POWER SUPPLY INCLUDING MODULAR CHARGING MODULES**

(30) Priority: 01.04.2022 US 202263326426 P; 24.06.2022 US 202263355206 P
(71) Applicant: Milwaukee Electric Tool Corporation, Brookfield, WI 53005 (US)
(72) Inventor: BROCHTRUP, David, Menomonee Falls 53051 (US); SABOURY, Justin, Brookfield 53045 (US); NAGAL, Vivek, Sussex 53089 (US)
(74) Representative: Forresters IP LLP

(57) **Abstract**

A portable power supply for charging power tool battery packs. The portable power supply includes a battery core including a plurality of battery cells and a converter, a first modular charger block received in a first charging slot and connected to a first charging port, a second modular charger block received in a second charging slot and connected to a second charging port and a third charging port, and a controller including an electronic processor. The controller is configured to determine that a first battery pack is received by the first charging port, determine that a device is received by the second charging port, determine a first characteristic of the first battery pack, and provide a first current to the first battery pack based on the first characteristic and a second current to the second battery pack based on the device being received by the second charging port.

## Description

### RELATED APPLICATIONS

This application claims the benefit of U.S. Provisional Patent Application No. 63/326,426, filed April 1, 2022, and U.S. Provisional Patent Application No. 63/355,206, filed June 24, 2022, the entire content of each of which is hereby incorporated by reference.

### SUMMARY

Portable power supplies provide flexibility and convenience for providing power to portable electronic devices. For example, a user may find themselves on a worksite without access to a conventional wall outlet and with a depleted power tool battery pack. A portable power supply offers the user an opportunity to charge battery packs in proximity to where they are working, so they can avoid spending time finding a location to charge their battery pack or traveling to a wall outlet to plug in a charger. In many cases, it is advantageous to charge various types of battery packs at once. As day-to-day tasks of a user using power tools may shift, the need for increased and/or different battery pack charging ports may arise.

It would be advantageous for a portable power supply to include charging module blocks that may be added to a base charging module block to accommodate charging of a plurality of battery packs. Charging module blocks provide different charging currents for different battery pack characteristics (e.g., capacities) and allow battery packs to be charged at the same time and sequentially. As a result, multiple battery packs with various power ratings may be charged by a single portable power supply. Accordingly, it would be desirable to have a portable power supply that can be customized with modular charging blocks to increase flexibility of charging battery packs in the portable power supply system.

Portable power supplies described herein are for charging power tool battery packs. The portable power supply includes a battery core including a plurality of battery cells, a first modular charger block received in a first charging slot and connected to a first charging port, a second modular charger block received in a second charging slot and connected to a second charging port, and a controller including an electronic processor. The controller is configured to determine that a first battery pack is received by the first charging port, determine that a device is received by the second charging port, determine a first characteristic of the first battery pack, and provide a first current to the first battery pack based on the first characteristic and a second current to the second battery pack based on the device being received by the second charging port.

In some aspects, the controller is further configured to enable a fan configured to cool the first charging port, wherein the fan is integrated into the first modular charger block.

In some aspects, the controller is further configured to determine that a second device is received by a third charging port, and provide, in response to determining that the second device is received by the third charging port, a third current to the second device.

In some aspects, the first modular charger block includes a first power buck and a second power buck.

In some aspects, the first power buck is capable of providing 18 amps of current to the first charging port.

In some aspects, the second modular charger block includes a first power buck and a second power buck.

In some aspects, the first power buck provides between 3.3 volts (V) and 21 V to the second charging port and the second power buck provides 5 V to a third charging port.

In some aspects, the second charging port is USB-C charging port and a third charging port is a USB-A charging port.

In some aspects, the first characteristic is a charge capacity of the first battery pack.

In some aspects, the device is one of a mobile phone, a tablet, a power tool, a battery pack, and a battery pack charger.

Method described herein are for providing power from a battery core of a portable power supply. The method includes determining, with an electronic processor of the portable power supply, that a first battery pack is received by a first charging port of a first modular charger included in the portable power supply, determining, with the electronic processor of the portable power supply, that a first device is received by a second charging port of a second modular charger included in the portable power supply, determining, with the electronic processor of the portable power supply, a first characteristic of the first battery pack, and providing, with the electronic processor of the portable power supply, a first current to the first battery pack based on the first characteristic and a second current to the first device based on the first device being received by the second charging port.

In some aspects, the method further includes determining, with the electronic processor of the portable power supply, that a second device is received by a third charging port of the second modular charger included in the portable power supply, and providing, with the electronic processor of the portable power supply, a third current to the second device.

In some aspects, the second device is a second battery pack.

In some aspects, the third current is less than the first current.

In some aspects, the method further includes determining, with the electronic processor of the portable power supply, that a second device is received by a third charging port of the second modular charger included in the portable power supply, determining, with the electronic processor of the portable power supply, that the first device is fully charged, and providing, with the electronic processor of the portable power supply, the second current to the second device.

In some aspects, the first device and the second device are battery packs.

Systems described herein include a first device, a second device, and a portable power supply. The portable power supply includes a battery core including a plurality of battery cells, a user interface, a first modular charger block received in a first charging slot and connected to a first charging port, a second modular charger block received in a second charging slot and connected to a second charging port, and a controller including an electronic processor. The electronic processor is configured to determine that the first device is received by the first charging port, determine that the second device is received by the second charging port, receive an input from the user interface, and provide a first current to the first device and a second current to the second device based on the input.

In some aspects, the input is one of a low-power input and a high-power input.

In some aspects, when the input is the low-power input, the first current is provided from the first modular charger block and the second current is provided from the second modular charger block.

In some aspects, when the input is the high-power input, the first current is a sum of currents provided from the first modular charger block and the second modular charger block.

Before any embodiments are explained in detail, it is to be understood that the embodiments are not limited in their application to the details of the configuration and arrangement of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software-based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%, or more) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Other aspects of the embodiments will become apparent by consideration of the detailed description and accompanying drawings.

### BRIEF DESCRIPTION OF THE DRAWINGS

FIG. 1A illustrates a perspective view of a portable power supply device, according to embodiments described herein.
FIG. 1B illustrates another portable power supply device, according to embodiments described herein.
FIG. 1C illustrates the portable power supply device of FIG. 1B with a top housing removed, according to embodiments described herein.
FIG. 1D illustrates a first charging module, according to embodiments described herein.
FIG. 1E illustrates a second charging module, according to embodiments described herein.
FIG. 1F illustrates a third charging module, according to embodiments described herein.
FIG. 1G illustrates a fourth charging module, according to embodiments described herein.
FIG. 1H illustrates a fifth charging module, according to embodiments described herein.
FIG. 1I illustrates a sixth charging module, according to embodiments described herein.
FIG. 1J illustrates a portable power supply configured to receive a plurality of charging modules.
FIG. 1K illustrates the portable power supply of FIG. 1J including a plurality of charging modules.
FIG. 2 illustrates a battery pack, according to embodiments described herein.
FIG. 3 illustrates an internal power source included in the portable power supply device of FIGS. 1A-1C, according to embodiments described herein.
FIG. 4A illustrates a first schematic diagram of modular charger blocks for the portable power supply device of FIGS. 1A-1C, according to embodiments described herein.
FIG. 4B illustrates second schematic diagram of modular charger blocs for the portable power supply device of FIGS. 1A-1C, according to embodiments described herein.
FIG. 5 illustrates a schematic diagram of a first modular charger block, according to embodiments described herein.
FIG. 6 illustrates a schematic diagram of a second modular charger block, according to embodiments described herein.
FIG. 7 illustrates a first schematic diagram of the portable power supply device of FIG. 1, according to embodiments described herein.
FIG. 8 illustrates a second schematic diagram of the portable power supply device of FIG. 1, according to embodiments described herein.
FIG. 9 illustrates a third schematic diagram of the portable power supply device of FIG. 1, according to embodiments described herein.
FIG. 10 illustrates a fourth schematic diagram of the portable power supply device of FIG. 1, according to embodiments described herein.
FIG. 11 is a block circuit diagram for the portable power supply device of FIGS. 1A-1C, according to embodiments described herein.
FIG. 12 is a communication system for the portable power supply device of FIGS. 1A-1C and an external device, according to some embodiments.
FIGS. 13-14 are a process for providing various charging currents to battery packs, according to embodiments described herein.
FIG. 15 is a process for providing a low power charging current to a first battery pack and a second battery pack, according to embodiments described herein.
FIG. 16 is a process for providing a high power charging current to a first battery pack, according to embodiments described herein.
FIG. 17 is a process for providing a requested charging current to at least two battery packs, according to embodiments described herein.
FIG. 18 is a process for providing a charging current to USB ports, according to embodiments described herein.

### DETAILED DESCRIPTION

Embodiments described herein relate to a portable power supply that includes modular charging blocks for flexible charging of battery packs.

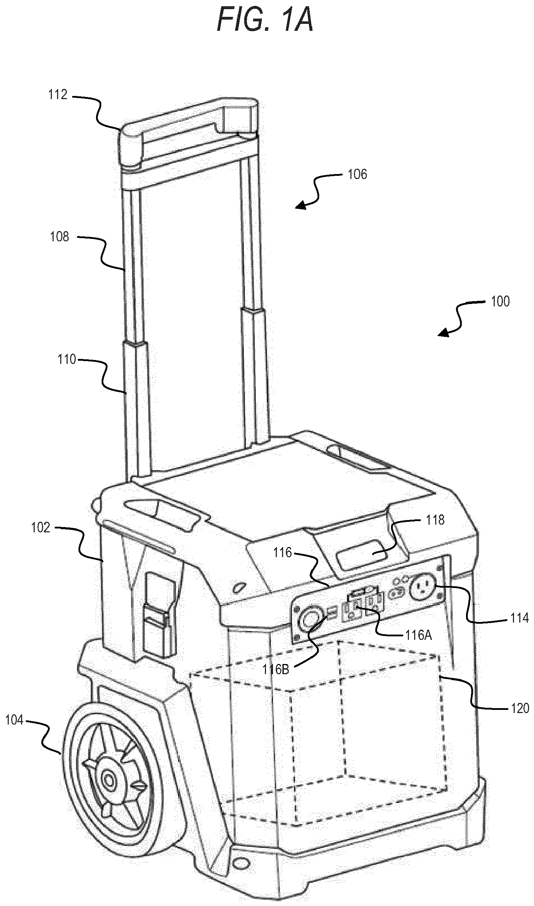

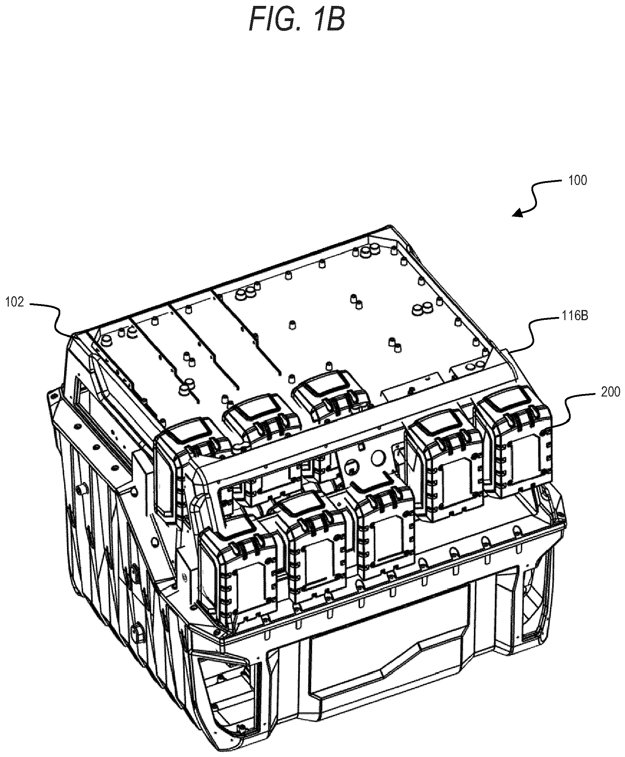

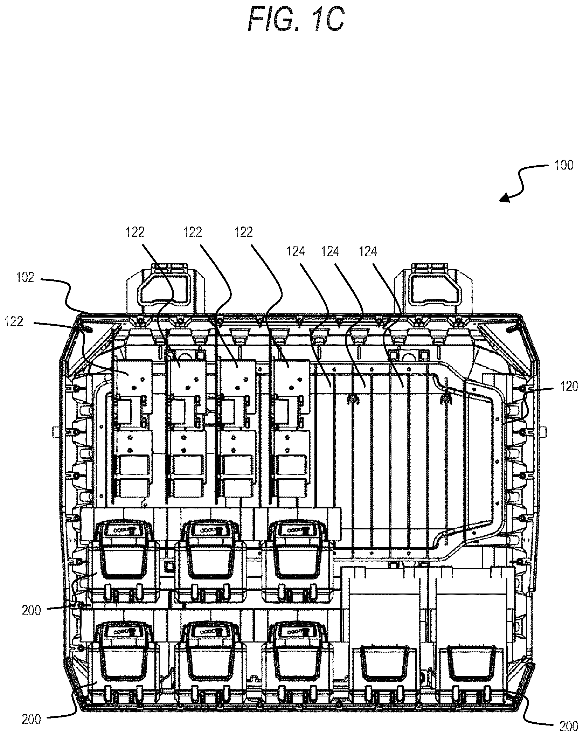

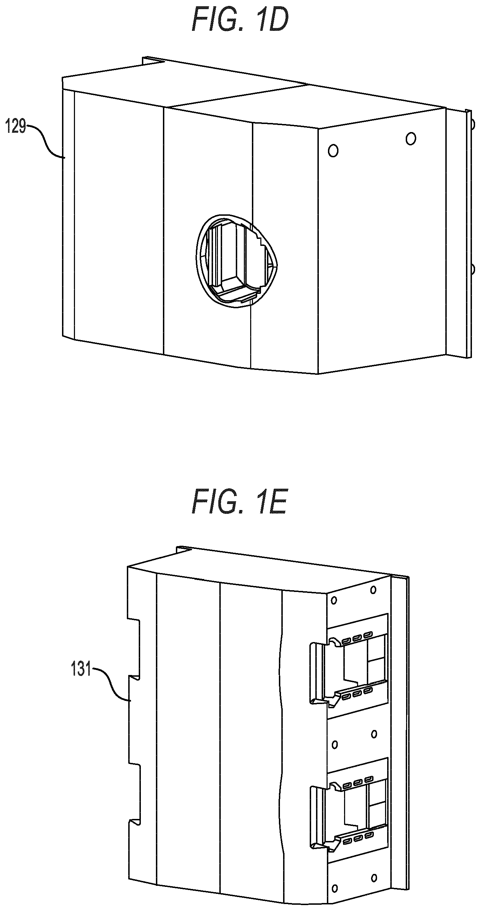

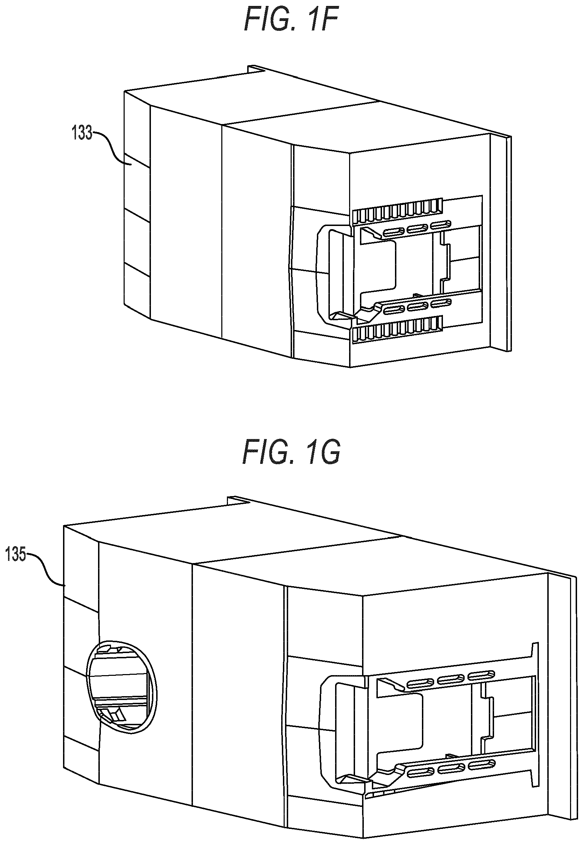

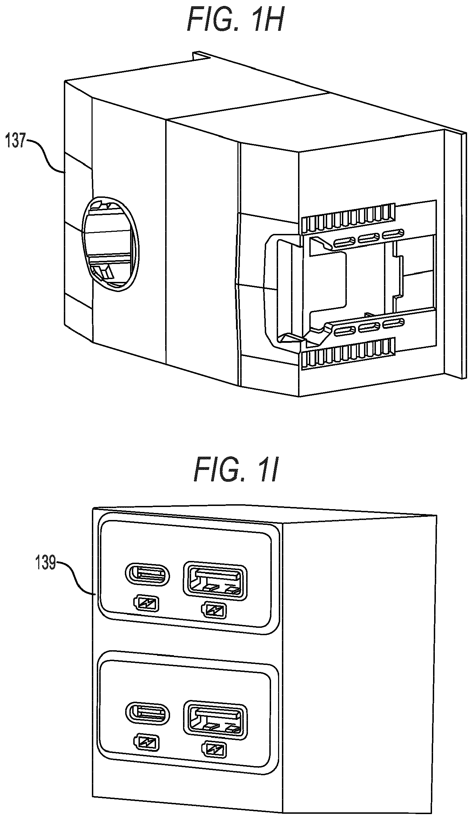

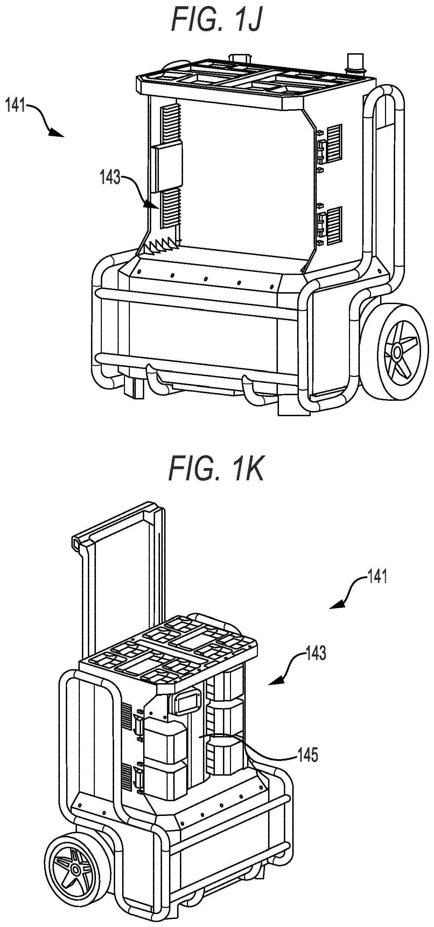

FIG. 1 illustrates a portable power supply device or power supply 100. The power supply 100 includes, among other things, a housing 102. In some embodiments, the housing 102 includes one or more wheels 104 and a handle assembly 106. In the illustrated embodiment, the handle assembly 106 is a telescoping handle movable between an extended position and a collapsed position. The handle assembly 106 includes an inner tube 108 and an outer tube 110. The inner tube 108 fits inside the outer tube 110 and is slidable relative to the outer tube 110. The inner tube 108 is coupled to a horizontal holding member 112. In some embodiments, the handle assembly 106 further includes a locking mechanism to prevent inner tube 108 from moving relative to the outer tube 110 by accident. The locking mechanism may include notches, sliding catch pins, or another suitable locking mechanism to inhibit the inner tube 108 from sliding relative to the outer tube 110 when the handle assembly 106 is in the extended position and/or in the collapsed position. In practice, a user holds the holding member 112 and pulls upward to extend the handle assembly 106. The inner tube 108 slides relative to the outer tube 110 until the handle assembly 106 locks in the extended position. The user may then pull and direct the power supply 100 by the handle assembly 106 to a desired location. The wheels 104 of the power supply 100 facilitate such movement.

The housing 102 of power supply 100 further includes a power input unit 114, a power output unit 116, and a display 118. In the illustrated embodiment, the power input unit 114 includes multiple electrical connection interfaces configured to receive power from an external power source. In some embodiments, the external power source is a DC power source. For example, the DC power source may be one or more photovoltaic cells (e.g., a solar panel), an electric vehicle (EV) charging station, or any other DC power source. In some embodiments, the external power source is an AC power source. For example, the AC power source may be a conventional wall outlet, such as a 120 V outlet or a 240 V outlet, found in North America. As another example, the AC power source may be a conventional wall outlet, such as a 220V outlet or 230V outlet, found outside of North America. In some embodiments, the power input unit 114 is replaced by or additionally includes a cable configured to plug into a conventional wall outlet. In some embodiments, the power input unit 114 further includes one or more devices, such as antennas or induction coils, configured to wirelessly receive power from an external power source. The power received by the power input unit 114 may be used to charge a core battery, or internal power source 120, disposed within the housing 102 of power supply 100.

The power received by the power input unit 114 may also be used to provide power to one or more devices connected to the power output unit 116. The power output unit 116 includes one more power outlets. In the illustrated embodiment, the power output unit 116 includes a plurality of AC power outlets 116A and DC power outlets 116B. It should be understood that number of power outlets included in the power output unit 116 is not limited to the power outlets illustrated in FIG. 1. For example, in some embodiments of the power supply 100, the power output unit 116 may include more or fewer power outlets than the power outlets included in the illustrated embodiment of power supply 100.

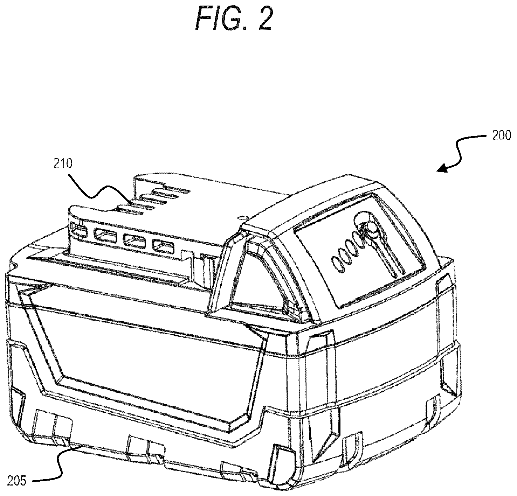

In some embodiments, the power output unit 116 is configured to provide power output by the internal power source 120 to one or more peripheral devices. In some embodiments, the power output unit 116 is configured to provide power provided by an external power source directly to one or more peripheral devices. The one or more peripheral devices may be a smartphone, a tablet computer, a laptop computer, a portable music player, a power tool, a power tool battery pack (e.g., a battery pack 200 [see FIG. 2]), a power tool battery pack charger, or the like. The peripheral devices may be configured to receive DC and/or AC power from the power output unit 116.

In some embodiments, the DC power outlets 116B also include one or more receptacles for receiving and charging power tool battery packs 200, as shown in FIG. 1B. In such embodiments, power tool battery packs 200 received by, or connected to, the battery pack receptacles 116B are charged with power output by the internal power source 120 and/or power received directly from the external power source. In some embodiments, power tool battery packs 200 connected to the battery pack receptacles 116B are used to provide power to the internal power source 120 and/or one or more peripheral devices connected to outlets of the power output unit 116. The battery pack receptacles 116B may include guide rails to receive slide-on style battery packs (such as battery pack 200) and latching mechanisms to secure the battery pack to the receptacle 116B. In such embodiments, the power supply 100 includes a plurality of charging modules or charging blocks 122 for charging various battery packs 200. The charging modules 122 can have different power ratings and can be interchangeable within different charging slots 124 within the power supply 100. Various charging modules will be described with respect to FIGS. 1D-1I, below. As a result, the power supply 100 can be configured with various combinations of battery pack chargers for charging battery packs of different voltages, charging at different rates, etc.

In some embodiments, the power output unit 116 includes tool-specific power outlets. For example, the power output unit may include a DC power outlet used for powering a welding tool. In some embodiments, the DC power outlets 116B are configured to support charging of battery packs with various power ratings (e.g., 12V, 18V, etc.).

The display 118 is configured to indicate a state of the power supply 100 to a user, such as state of charge of the internal power source 120 and/or fault conditions. In some embodiments the display 118 includes one or more light-emitting diode ("LED") indicators configured to illuminate and display a current state of charge of internal power source 120. In some embodiments, the display 118 is, for example, a liquid crystal display ("LCD"), a light-emitting diode ("LED") display, an organic LED ("OLED") display, an electroluminescent display ("ELD"), a surface-conduction electron-emitter display ("SED"), a field emission display ("FED"), a thin-film transistor ("TFT") LCD, an electronic ink display, etc. In other embodiments, the power supply 100 does not include a display.

FIG. 1D illustrates a first charging module 129. The first charging module 129 may accommodate a stem-type battery pack that has a rated voltage (e.g., 12 V). The first charging module 129 may be removably provided in the power supply 100 to provide a charging current to the battery pack when the battery pack is received by the first charging module 129.

FIG. 1F illustrates a second charging module 131. The second charging module 131 may accommodate up to four slide-on battery packs that have a rated voltage (e.g., 18 V). The second charging module 131 may be removably provided in the power supply 100 to provide a charging current to up to four battery packs when up to four battery packs are received by the second charging module 131. The second charging module may include four charging ports that are individually controlled by a controller of the power supply 100.

FIG. 1F illustrates a third charging module 133. The third charging module 133 may accommodate a slide-on battery pack that has a rated voltage (e.g., 18 V). The third charging module 133 includes a fan for cooling the battery pack. The fan may be controlled by a controller of the power supply 100 and may automatically turn on when the battery pack is inserted into the third charging module 133, or when a sensor coupled to the controller senses that the battery pack's temperature has reached a certain threshold value.

FIG. 1G illustrates a fourth charging module 135. The fourth charging module 135 may accommodate a first battery pack (e.g., a stem-type battery pack) that has a rated voltage (e.g., 12 V) and a second battery pack (e.g., a slide-on battery pack) that has a rated voltage (e.g., 18 V). The fourth charging module 135 may be removably provided in the power supply 100 to provide a first charging current or a second charging current to the battery packs when the battery packs are received by the fourth charging module 135.

FIG. 1H illustrates a fifth charging module 137. The fifth charging module 137 may accommodate a first battery pack (e.g., a stem-type battery pack) that has a rated voltage (e.g., 12 V) and a second battery pack (e.g., a slide-on battery pack) that has a rated voltage (e.g., 18 V). The fifth charging module 137 may be removably provided in the power supply 100 to provide a first charging current or a second charging current to the battery packs when the battery packs are received by the fifth charging module 137. The fifth charging module 137 includes a fan for cooling the battery pack. The fan may be controlled by a controller of the power supply 100 and may automatically turn on when a battery pack is inserted into the fifth charging module 137, or when a sensor coupled to the controller senses that the battery pack's temperature has reached a certain threshold value.

FIG. 1I illustrates a sixth charging module 139. The sixth charging module 139 may provide between 3 V and 21 V to devices electrically coupled to charging ports of the sixth charging module 139. The charging ports may include at least one USB C charging port that provides between 3.3 V and 21 V to a device coupled to the USB C charging port, and/or at least one USB A charging port that provides 5 V at 2.4 Amps to a device couple to the USB A charging port. Devices may be electrically coupled to the charging ports via charging cables.

FIG. 1J and 1K illustrate another embodiment of a power supply 141 that is similar to the power supply 100. The power supply 141 includes a compartment 143 that is configured to receive one or more charging modules 145. For example, the power supply 100, 141 may be configured with any combination of charging modules 129, 131, 133, 135, 137, 139. The power supply 141 distributes, for example, a 24 V bus to the charging modules 129, 131, 133, 135, 137, 139. In some embodiments, the power supply 141 may include a converter (e.g., LLC, dual active bridge, full bridge, CLLC) that is between an input power source and the charging modules 129, 131, 133, 135, 137, 139 that provides the 24 V bus voltage to the charging modules 129, 131, 133, 135, 137, 139.

FIG. 2 illustrates a battery pack 200 that is configured to receive power from the portable power supply 100 via the battery pack receptacle 116B. The battery pack 200 includes a housing 205 and an interface portion 210 for connecting the battery pack 200 to a device (e.g., a power tool), a battery pack charger, or the portable power supply 100.

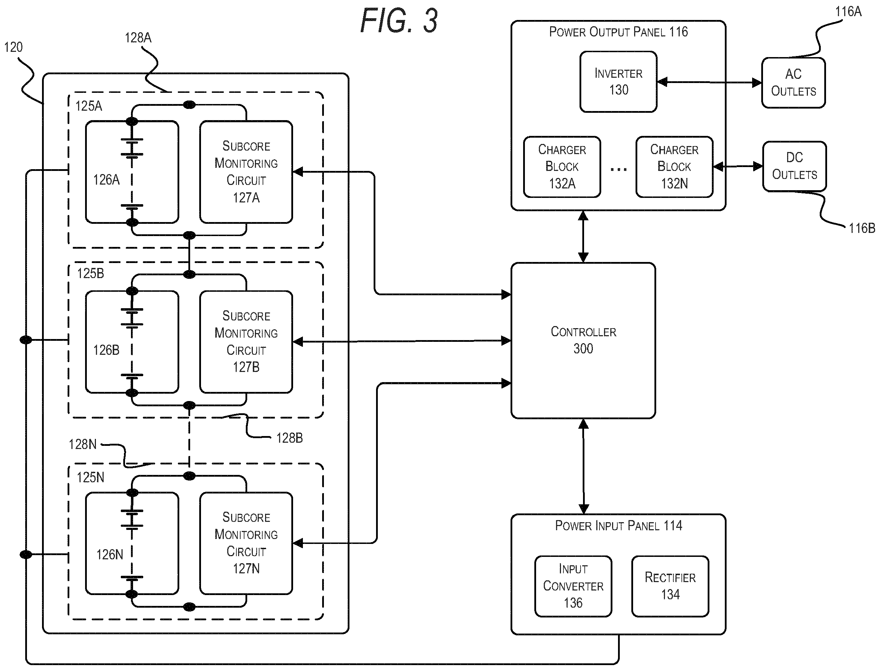

FIG. 3 illustrates a block diagram of the internal power source 120 included in the power supply 100 according to some embodiments. As shown in FIG. 3, the internal power source 120 includes one or more subcore modules 125A-125N. At least one subcore module 125 is included in the internal power source 120. However, internal power source 120 may include any desired number, N, of subcore modules 125A-125N. Although illustrated as being connected in series, the subcore modules 125A-125N may be electrically connected in series, in parallel, and/or a combination thereof. In some embodiments, the subcore modules 125A-125N included in the internal power source 120 are implemented as rechargeable battery packs, such as power tool battery packs. As will be described later in more detail, the rechargeable battery packs included in the internal power source 120 may be 24V. In some embodiments, the rechargeable battery packs may be relatively high voltage (e.g., 72V, 100V, 120V, 240V, etc.) battery packs used for powering large power tools.

The following description of an individual subcore module 125 is written with respect to subcore module 125A. However, it should be understood that each individual subcore module 125 included in the internal power source 120 can include similar components and include corresponding reference numerals (e.g., 125B, 126B, 127B, 125N, 126N, 127N, etc.). Subcore module 125A includes a stack, or plurality, of battery cells 126A. The stack of battery cells 126A includes at least two battery cells electrically connected in series. However, the stack of battery cells 126A may include as many battery cells as desired. For example, the stack of battery cells 126A may include two, three, four, ten, twenty, twenty-three, twenty-eight, forty-six, seventy or more battery cells electrically connected in series. In some embodiments, the stack of battery cells 126A includes battery cells that are electrically connected in parallel. In some embodiments, the stack of battery cells 126A includes battery cells that are electrically connected in series and in parallel. In some embodiments, the subcore module 125A includes multiple stacks of battery cells 126A that are electrically connected in parallel with one another.

The battery cells included in the stack of battery cells 126A are rechargeable battery cells having a lithium ion chemistry, such as lithium phosphate or lithium manganese. In some embodiments, the battery cells included in the stack of battery cells 126A may have lead acid, nickel cadmium, nickel metal hydride, and/or other chemistries. Each battery cell in the stack of battery cells 126A has an individual nominal voltage. The nominal voltage of an individual battery cell included in the stack of battery cells 126A may be, for example, 4.2V, 4V, 3.9V, 3.6V, 2.4V, or some other voltage value. For exemplary purposes, it will be assumed that the nominal voltage of an individual battery cell included in the stack of battery cells 126A is equal to 4V. Accordingly, if the stack of battery cells 126A includes two battery cells connected in series, the nominal voltage of the stack of battery cells 126A, or the subcore module 125A, is equal to 8.0V. Similarly, if the stack of battery cells 126A includes twenty three battery cells connected in series, the nominal voltage of the subcore module 125A is 92V. In some embodiments, the stack of battery cells 126A includes eight battery cells connected in series, and the nominal voltage of the subcore module 125A is 24V. The amp-hour capacity, or capacity, of subcore module 125A may be increased by adding battery cells connected in a parallel-series combination to the stack of battery cells 126A. s

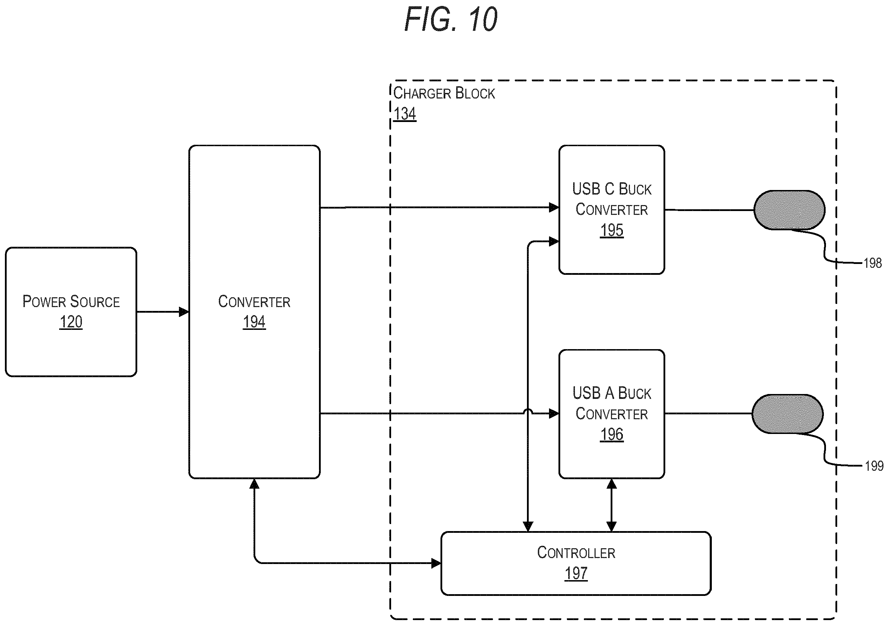

Subcore module 125A further includes a battery, or subcore, monitoring circuit 127A and a subcore housing 128A. The subcore monitoring circuit 127A is electrically connected to the stack of battery cells 126A and a controller 300 (see FIG. 10) included in the power supply 100. The subcore monitoring circuit 127A receives power from the stack of battery cells 126A during operation of the power supply 100. The subcore monitoring circuit 127A is configured to sense the state-of-charge ("SOC") level, or voltage value, of the stack of battery cells 126A and transmit the voltage readings to the controller 300. The voltage level of subcore module 125A may be determined by measuring the total open circuit voltage of the stack of battery cells 126A or by summing the open circuit voltage measurement of each parallel string of battery cells in the stack of battery cells 126A. In some embodiments, the subcore monitoring circuit 127A is additionally configured to sense a discharge current of the stack of battery cells 126A (e.g., using a current sensor) and/or a temperature of the subcore module 125A (e.g., using a temperature sensor) and transmit the sensed current and/or temperature readings to the controller 300. The subcore monitoring circuit 127A is further configured to receive commands from the controller 300 during operation of the power supply 100.

In some embodiments, the stack of battery cells 126A and subcore monitoring circuit 127A are disposed within the subcore housing 128A of the subcore module 125A. In some embodiments, the stack of battery cells 126A is disposed within the subcore housing 128A and the subcore monitoring circuit 127A is included as a component of the controller 300. In some embodiments, the subcore module 125A does not include a subcore housing 128A.

As described above, the internal power source 120 of power supply 100 may include multiple subcore modules 125 electrically connected in series and/or parallel. For example, if the internal power source 120 includes a first subcore module 125A and a second subcore module 125B electrically connected in series, where each of the first subcore module 125A and the second subcore module 125B has a nominal voltage of 92V, the combined voltage of the first subcore module 125A and second subcore module 125B equals 184V. Accordingly, the voltage level at which the internal power source 120 outputs DC power is 184V. Likewise, if the internal power source 120 includes five series-connected subcore modules 125A-125E, where each of the subcore modules 125A-125E has a nominal voltage of 56V, the voltage level at which the internal power source 120 outputs DC power is 280V. Any number of subcore modules 125A-125N may be electrically connected in series and/or parallel to achieve a desired nominal voltage and/or capacity for internal power source 120.

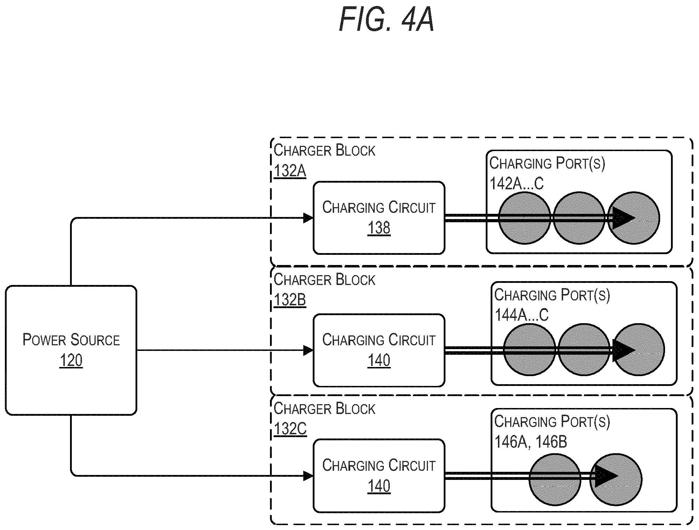

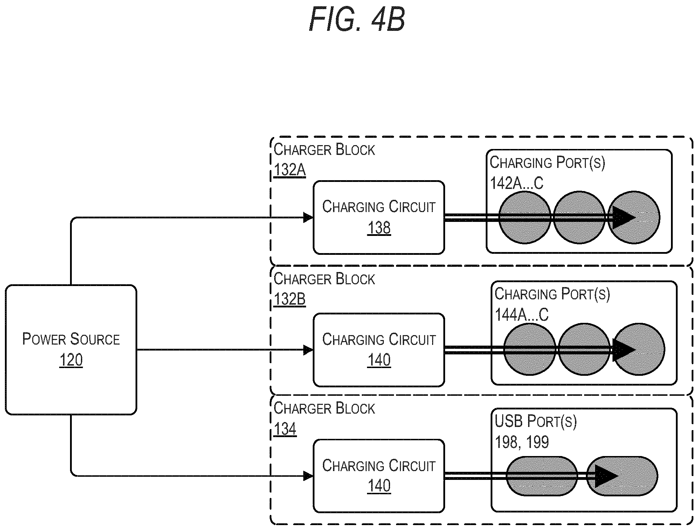

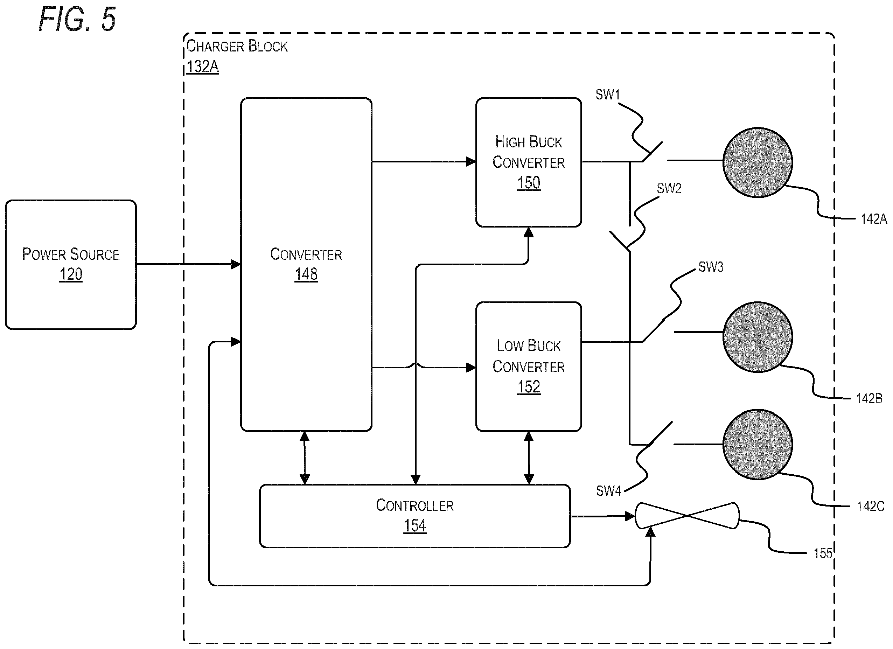

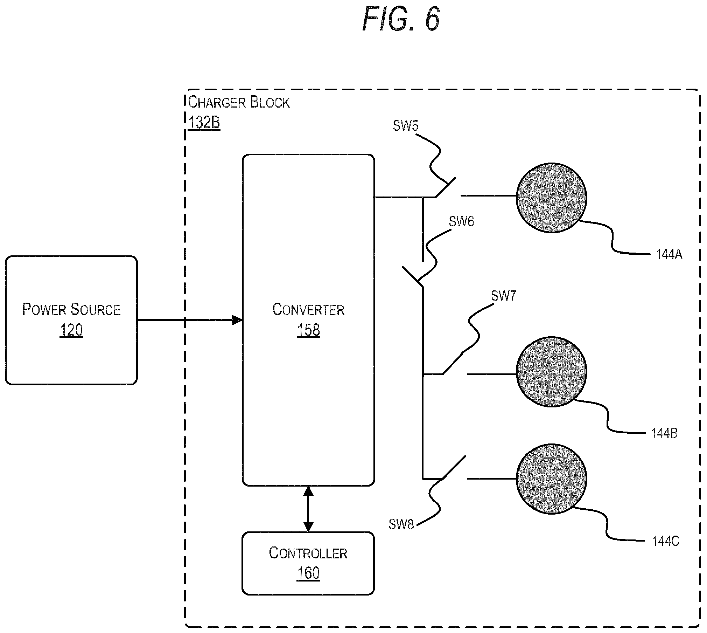

In some embodiments, the power output unit 116 includes charger blocks 132. The charger blocks 132 are self-contained charging modules that can support charging of one, two, or three or more battery packs 200 via charging ports 142 (see FIG. 4). In some embodiments, the charger blocks vary in output power, as will be described with respect to FIGS. 5 and 6. Because the charger blocks 132 are self-contained and modular, individual charger blocks 132 can be interchangeable used in place of one another (e.g., in different charging slots 124 in FIG. 1C). In some embodiments, a user is able to access the charger blocks 132 to reconfigure the charger blocks 132 as desired. In other embodiments, the charger blocks 132 are only accessible by a technician at a service center or at the time of manufacture. Each charger block 132 includes the necessary electrical and communicative connections for connecting to the power supply 100 (e.g., power terminals, communication terminals, CAN bus port, etc.). As a result, any one of the charger blocks 132 can be physically removed or detached from the power supply 100 and replaced with a different charger block 132 that can then be physically attached to the power supply 100. In some embodiments, the portable power supply 100 includes only one charger block 132, and the charger block 132 can include a plurality of power outputs.

FIG. 4A illustrates a first schematic diagram of the modular charger blocks 132 (e.g., charging modules 122-134 in FIGS. 1C-1I) for the portable power supply 100. The schematic diagram includes the power source 120, a first charger block 132A, a second charger block 132B, and a third charger block 132C. The power source 120 provides power to the charging circuits 138, 140. The first charger block 132A includes a charging circuit 138 and charging ports 142A, 142B, 142C. The second charger block 132B includes a charging circuit 140 and charging ports 144A, 144B, 144C. The third charger block 132C includes the charging circuit 140 and charging ports 146A, 146B. As evidenced by the charging circuit 140 being included in both the second charger block 132B and the third charger block 132C, the output current or power available for both the second charger block 132B and the third charger block 132C may be the same. For example, both the second charger block 132B and the third charger block 132C provide a total of 6 Amps to their respective charging ports 144, 146.

The charger blocks 132 of FIG. 4A are purely illustrative. In some embodiments, the power supply 100 may only include the first charger block 132A. In some embodiments, the power supply 100 may include only the first charger block 132A and the second charger block 132B. Any number of charging blocks similar to the second charger block 132B and the third charger block 132C may be included in the power supply 100. In some embodiments, charger blocks similar to and including the second charger block 132B and the third charger block 132C may be added to the preexisting first charger block 132A. For example, an additional charger block 132B, 132C may be added to the first charger block 132A by professional installation (e.g., at a power supply 100 service center).

FIG. 4B illustrates a second schematic diagram of modular charger blocks 132, 134 (e.g., charging blocks 122-139 in FIGS. 1C-1I) for the portable power supply 100. The schematic diagram includes the power source 120, the first charger block 132A, the second charger block 132B, and a third charger block 134. Similar to FIG. 4A, the first charger block 132A includes a charging circuit 138 and charging ports 142A, 142B, 142C. The second charger block 132B includes a charging circuit 140 and charging ports 144A, 144B, 144C. The third charger block 134 includes a charging circuit 142 and universal serial bus (USB) ports 198, 199. As evidenced by the charging circuit 140 being included in both the second charger block 132B and the third charger block 134, the output current or power available for both the second charger block 132B and the third charger block 134 may be the same. For example, both the second charger block 132B and the third charger block 134 provide a total of 6 Amps to their respective charging ports 144 and USB ports 198, 199. The charger blocks 132, 134 are user swappable and may include any combination of types of block, as long as the output is below the output of the power source 120. For example, the first charger block 132A and two third charger blocks 134 may be combined to provide charging outputs.

FIG. 5 illustrates a schematic diagram of the first modular charger block 132A. The first charger block 132A includes a converter 148, a high buck converter 150, a low buck converter 152, a controller 154, a fan 155, charging ports 142A, 142B, 142C, and a plurality of switches SW1, SW2, SW3, SW4. The power source 120 provides power to the converter 148. In some embodiments, the power source 120 provides 24 V to the converter 148. In some embodiments, the converter 148 is an LLC converter. For example, the LLC converter may include two inductors, a capacitor, and a transformer. The converter 148 scales the input power received from the power source 120 to usable power by the high buck converter 150 and the low buck converter 152. For example, the converter 148 may provide 24 Amps of charging current total to the high buck converter 150 and the low buck converter 152. In some embodiments, the converter 148 may be external to the charger block 132A and incorporated into the power supply 100 along with the power source 120.

The high buck converter 150 and the low buck converter 152 deliver current to the charging ports 142A-142C. In some embodiments, the high buck converter 150 provides 12 Amps of current to the first charging port 142A. In some embodiments, the low buck converter 152 provides between 6-9 Amps of current to the second and third charging ports 142B, 142C. Switches SW1, SW2, SW3, SW4 control which charging ports 142 receive a charging current. The switches SW1, SW2, SW3, SW4 may be mechanical switches, transistors, or the like. In some embodiments, the switches SW1, SW2, SW3, SW4 may be configured such that a single charging port 142A receives 18 Amps of charging current (e.g., switches SW1, SW2 are closed and switches SW3, SW4 are open). Alternatively, the switches SW1, SW2, SW3, SW4 may be configured such that the first charging port 142A receives 12 Amps of charging current, and both of the second and third charging ports 142B, 142C receive 6 Amps of charging current, simultaneously (e.g., switches SW1, SW3 SW4 are closed and switch SW2 is open).

The switches SW1, SW2, SW3, SW4 may be controlled by the controller 154. In some embodiments, the controller 154 monitors the charging ports 142A-142C to control charging current delivery to the charging ports 142A-142C. In some embodiments, the controller 154 receives inputs from an external device (e.g., a mobile phone, computer, tablet, etc.) that controls the amount of charging current received by the charging ports 142A-142C. In some embodiments, the controller 154 can determine a battery pack rating when the battery pack 200 is received by the charging port 142A-142C. For example, the battery pack 200 may be received by the first charging port 142A and the controller 154 may determine the battery pack is rated for 18 Amps. Accordingly, the controller 154 may close the appropriate switches to provide 18 Amps of charging current from the high buck converter 150 and the low buck converter 152 to the first charging port 142A. As another example, the controller 154 may determine a first battery pack and a second battery pack, both rated for 18 Amps, were received by the first charging port 142A and the second charging port 142B, respectively, and the controller 154 may control the switches to provide 12 Amps of charging current to both of the charging ports 142A, 142B, simultaneously.

In addition to controlling the switches, the controller 154 may control the fan 155. The fan 155 provides a cooling airflow to the battery pack 200 that is coupled to the charging port 142A-142C. In some embodiments, the first charger block 132A may include multiple fans 155 to cool battery packs 200 coupled to each of the charging ports 142A-142C. The controller 154 may communicate with the controller 300 over a control area network ("CAN") bus to share status information with the power supply 100 and to receive mode commands.

FIG. 6 illustrates a schematic diagram of the second modular charger block 132B. The second charger block 132B includes a converter 158, a controller 160, charging ports 144A, 144B, 144C, and switches SW5, SW6, SW7, SW8. The power source 120 provides power to the converter 158. In some embodiments, the converter 158 converts incoming power from the power source 120 to a 6 Amp charging current. Alternatively, or additionally, in some embodiments, the converter 158 converts the incoming power from the power source 120 to a 9, 12, 15, or 18 Amp charging current. The converter 158 may receive 24 V from the power source 120 and convert the incoming power to output 6 Amps to the first charging port 144A, 6 Amps to the second charging port 144B, and 9 Amps to the third charging port 144C. In some embodiments, the converter 158 may be external to the charger block 132B and incorporated into the power supply 100 along with the power source 120.

The controller 160 controls the switches SW5, SW6, SW7, SW8 to sequentially provide the charging current to the charging ports 144. For example, when the charging current is output from the converter 158, the charging current flows first to the first charging port 144A (e.g., switch SW5 is closed and switches SW6, SW7, SW8 are open). When the controller 160 determines that the battery pack 200 coupled to the first charging port 144A is fully charged, the controller 160 controls the switches such that the charging current flows to the second charging port 144B (e.g., switches SW6, SW7 are closed and switches SW5, SW8 are open). When the controller determines that the battery pack 200 coupled to the second charging port 144B is fully charged, the controller 160 controls the switches such that the charging current flows to the third charging port 144C (e.g., switches SW6, SW8 are closed and switches SW5, SW7 are open). In some embodiments, the charger block 132B may not include switch SW6. The controller 160 may communicate with a CAN bus to share status information with the power supply 100 and to receive mode commands.

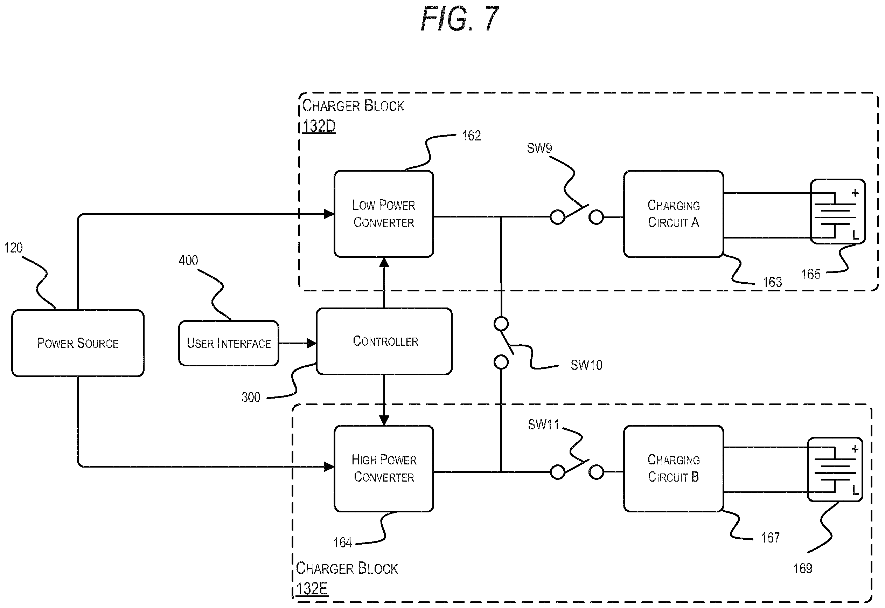

FIG. 7 illustrates a first schematic diagram of the portable power supply 100 of FIGS. 1A-1C. The first schematic diagram includes the power source 120, a user interface 400, the controller 300, a fourth charger block 132D, a fifth charger block 132E, and a switch SW10. The fourth charger block 132D includes a low power converter 162 (e.g., a 6 Amp power converter), a switch SW9, charging circuit A 163, and a connected battery pack 165. The fifth charger block 132E includes a high power converter 186 (e.g., a 12 Amp power converter), a switch SW11, charging circuit B 167, and a connected battery pack 169. Although a 6 Amp power supply and a 12 Amp power supply are illustrated, different Amp values for the power supplies can also be used, the power supplies can have the same Amp rating, etc. The power source 120 provides power to the converters 162, 164. The converters 162, 164 convert the power output from the power source 120 to a 6 Amp charging current and a 12 Amp charging current, respectively.

The switches SW9, SW10, SW11 are controlled by the controller 300 based on, for example, an input from the user interface 400. The switch SW9 of the fourth charger block 132D may be controlled by the controller 300 to allow charging current to flow from the low power converter 162 to charging circuit A 163, thus, enabling the fourth charger block 132D. The switch SW11 of the fifth charger block 132E may be controlled by the controller 300 to allow charging current to flow from the high power converter 164 to charging circuit B 167, thus, enabling the fifth charger block 132E. Switch SW10 can be integrated into the portable power supply 100 and is also controllable by the controller 300. In some embodiments, the controller 300 may close switch SW10 when sequential charging of the battery packs 165, 169 is taking place. For example, the user interface 400 may receive an input indicating that there is no rush in charging battery packs 165, 169 and the controller 300 may sequentially charge the battery packs 165, 169 so as to not overload the power source 120.

In some embodiments, the charger blocks 132 may borrow an output charging current from one another. For example, a user may interact with the user interface 400 to set the charge rate of the charging circuits 163, 167. A user may choose a normal-power configuration or a high-power configuration for a particular charging circuit 163, 167. For example, the user interface 400 may include buttons (e.g., on a screen) that correspond with an off configuration, a normal-power configuration for charging circuit A 163, and a high-power configuration for charging circuit A 163 or charging circuit B 167. Other power configurations may be contemplated. In some embodiments, the controller 300 receives inputs from an external device (e.g., a mobile phone, computer, tablet, etc.) that controls the charge rate of the charging circuits 163, 167.

When a normal-power configuration for charging circuit A 163 is input by a user at the user interface 400 for charging circuit A 163, the controller 300 controls switches SW9, SW11 close and switch SW10 to open. Accordingly, the power from the low power converter 162 flows to charging circuit A 163, which then charges the first battery pack 156 using 6 Amps of current and the power from the high power converter 164 flows to charging circuit B 167, which then charges the second battery pack 169 using 12 Amps of current.

When a high-power configuration is input by a user at the user interface 400, the controller 300 controls either switches SW9, SW10 to close and switch SW11 to open, or switches SW10, SW11 to close and switch SW9 to open. Accordingly, the power from the low power converter 162 of charger block 132D and the high power converter 164 of charger block 132E flows to charging circuit A 163 or charging circuit B 167, respectively, charging the respective battery pack 165, 169 with 18 Amps of charging current.

In some embodiments, the battery pack receiving the output from both power converters 162, 264 (e.g., in the higher-power configurations) reaches a full charge faster than when both the battery packs receive power from their respective power supplies (e.g., during normal operation of the charger blocks 132).

In some embodiments, the switches SW9, SW10, SW11 may all be open when the portable power supply 100 is in the off configuration or no battery packs 165, 169 are attached to the portable power supply 100.

Tables 1-6, below, are examples of the various power output configurations that may be implemented by the portable power supply 100, and more specifically, by the circuit components in the schematic diagram of FIG. 7. In some embodiments, the user interface 400 may include inputs (e.g., buttons, switches, etc.) corresponding to each power output configuration. Switch designations of S_{A}, S_{B}, and Sc correspond to switches SW9, SW10, and SW11, respectively.

**TABLE 1**

| **Output Circuitry** | **Switch Combinations** | | **Battery Packs** | **Power Output** |
|---|---|---|---|---|
| Power Output A | S_{A} | ON | Battery Pack 1 | A |
| | S_{B} | OFF | | |
| | S_{C} | ON | | |
| Power Output B | S_{A} | ON | Battery Pack 2 | B |
| | S_{B} | OFF | | |
| | S_{C} | ON | | |

**TABLE 2**

| **Output Circuitry** | **Switch Combinations** | | **Battery Packs** | **Power Output** |
|---|---|---|---|---|
| Power Output A | S_{A} | ON | Battery Pack 1 | A + B |
| | S_{B} | ON | | |
| | S_{C} | OFF | | |
| Power Output B | S_{A} | ON | Battery Pack 2 | 0 |
| | S_{B} | ON | | |
| | S_{C} | OFF | | |

**TABLE 3**

| **Output Circuitry** | **Switch Combinations** | | **Battery Packs** | **Power Output** |
|---|---|---|---|---|
| Power Output A | S_{A} | OFF | Battery Pack 1 | 0 |
| | S_{B} | ON | | |
| | S_{C} | ON | | |
| Power Output B | S_{A} | OFF | Battery Pack 2 | A+B |
| | S_{B} | ON | | |
| | S_{C} | ON | | |

**TABLE 4**

| **Output Circuitry** | **Switch Combinations** | | **Battery Packs** | **Power Output** |
|---|---|---|---|---|
| Power Output A | S_{A} | ON | Battery Pack 1 | A |
| | S_{B} | OFF | | |
| | S_{C} | OFF | | |
| Power Output B | S_{A} | ON | Battery Pack 2 | 0 |
| | S_{B} | OFF | | |
| | S_{C} | OFF | | |

**TABLE 5**

| **Output Circuitry** | **Switch Combinations** | | **Battery Packs** | **Power Output** |
|---|---|---|---|---|
| Power Output A | S_{A} | OFF | Battery Pack 1 | 0 |
| | S_{B} | OFF | | |
| | S_{C} | ON | | |
| Power Output B | S_{A} | OFF | Battery Pack 2 | B |
| | S_{B} | OFF | | |
| | S_{C} | ON | | |

**TABLE 6**

| **Output Circuitry** | **Switch Combinations** | | **Battery Pack** | **Power Output** |
|---|---|---|---|---|
| Power Output A | S_{A} | OFF | Battery Pack 1 | 0 |
| | S_{B} | OFF | | |
| | S_{C} | OFF | | |
| Power Output B | S_{A} | OFF | Battery Pack 2 | 0 |
| | S_{B} | OFF | | |
| | S_{C} | OFF | | |

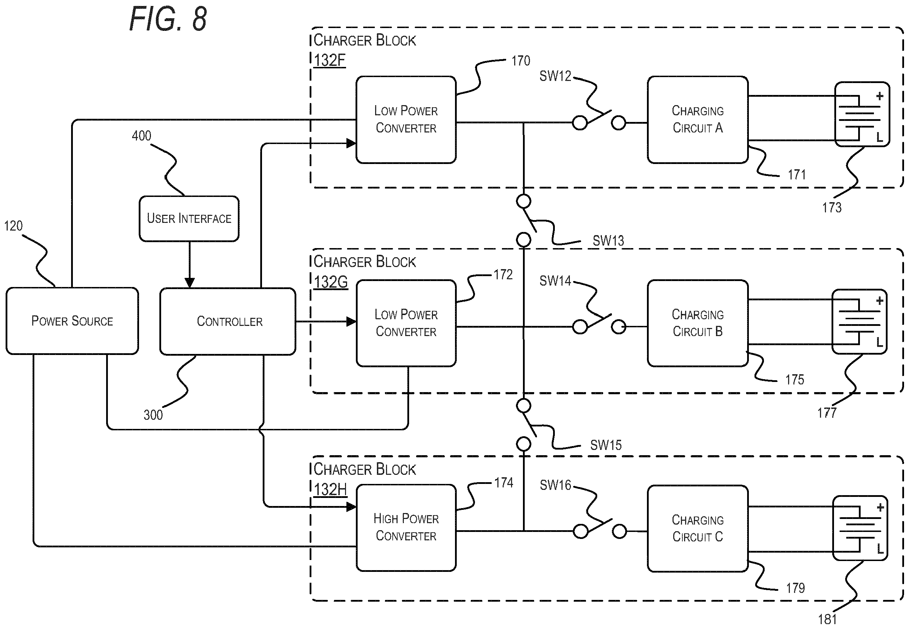

FIG. 8 illustrates a schematic diagram of the portable power supply 100 of FIGS. 1A-1C. The schematic diagram incudes the power source 120, the user interface 400, the controller 300, a sixth charger block 132F, a seventh charger block 132G, an eighth charger block 132H, and switches SW13, SW15. The sixth charger block 132F includes a low power converter 170, a switch SW12, charging circuit A 171, and battery pack 173. The seventh charger block 132G includes a low power converter 172, a switch SW14, charging circuit B 175, and battery pack 177. The eighth charger block 132H includes a high power converter 174, a switch SW16, charging circuit C 179, and battery pack 181. The power source 120 provides power to the converters 170, 172, 174. The converters 170, 172, 174 convert the power output from the power source 120 to a 6 Amp charging current, another 6 Amp charging current, and a 12 Amp charging current, respectively. In some embodiments, the user interface 400 may receive and input indicating that there is no rush in charging battery packs 173, 177, 181, and the controller 300 may sequentially charge the battery packs 173, 177, 181 (e.g., by sequentially enabling each charger block 132) so as to not overload the power source 120.

The switches SW12, SW13, SW14, SW15, SW16 are controlled by the controller 300 based on an input from the user interface 400. The switch SW12 of the sixth charger block 132F may be controlled by the controller 300 to allow charging current to flow from the low power converter 170 to charging circuit A 171, thus, enabling the sixth charger block 132F. The switch SW14 of the seventh charger block 132G may be controlled by the controller 300 to allow charging current to flow from the low power converter 172 to charging circuit B 175, thus, enabling the seventh charger block 132G. The switch SW16 of the eighth charger block 132H may be controlled by the controller 300 to allow charging current to flow from the high power converter 174 to charging circuit C 179, thus, enabling the eighth charger block 132H. Switches SW13, SW15 are integrated into the portable power supply 100 and are also controllable by the controller 300. In some embodiments, the controller 300 may close switches SW13, SW15 when sequential charging of the battery packs 173, 177, 181 is taking place. For example, the user interface 400 may receive an input indicating that there is no rush in charging battery packs 173, 177, 181, and the controller 300 may sequentially charge the battery packs 173, 177, 181 by sequentially enabling the respective charger blocks 132, so as to not overload the power source 120.

In some embodiments, the charger blocks 132 may borrow an output charging current from one another. For example, a user may interact with the user interface 400 to set the charge rate of the charging circuits 171, 175, 179. For example, the user interface 400 may include buttons (e.g., on a screen) that correspond with an off configuration, normal-power configuration for the charging circuits 171, 175, 179, a medium-power circuit for charging circuit A or charging circuit B, and a high-power configuration for any one of the charging circuits 171, 175, 179. Other power configurations may be contemplated. In some embodiments, the controller 300 receives inputs from an external device (e.g., a mobile phone, computer, tablet, etc.) that controls the charge rate of the charging circuits 171, 175, 179.

When a normal-power configuration is input by a user at the user interface 400, the controller 300 controls switches SW12, SW14, SW16 to close and switches SW13, SW15 to open. Accordingly, the power from low power converter 170 flows to charging circuit A 171, which then charges the first battery pack 173 using 6 Amps of current, the power from low power converter 172 flows to charging circuit B 175, which then charges the second battery pack 177 using 6 Amps of current, and the power from the high power converter 174 flows to charging circuit C 179, which then charges the third battery pack 181 using 12 Amps of current.

When a first medium-power configuration is input by a user at the user interface 400, the controller 300 controls switches SW12, SW13 to close and switches SW14, SW15, SW16 to open. Accordingly, the power from the low power converters 170, 172 flows to charging circuit A 171, which then charges the first battery pack 173 using 12 Amps of current.

When a second medium-power configuration is input by a user at the user interface 400, the controller 300 control switches SW13, SW14 to close and switches SW12, SW15, SW 16 to open. Accordingly, the power from the low power converters 170, 172 flows to charging circuit B 175, which then charges the second battery pack 177 using 12 Amps of current. During both the first and second medium-power configuration the power from the high power converter 174 may flow to charging circuit C 179 (such that switch SW16 would be closed), which then charges the third battery pack 181 using 12 Amps of current.

When a first high-power configuration is input by a user at the user interface 400, the controller 300 controls switches SW12, SW13, SW15 to close and switches SW14, SW16 to open. Accordingly, the power from low power converters 170, 172 and the high power converter 174 flows to charging circuit A 171, which then charges the first battery pack 173 using 24 Amps of current. Charging circuit B 175 and charging circuit C 179 do not receive any power. In some embodiments, the battery pack receiving 24 Amps of current may be a high-capacity, high-output battery pack that requires 24 Amps of current to be charged.

When a second high-power configuration is input by a user at the user interface 400, the controller 300 controls switches SW13, SW14, SW15 to close and switches SW12, SW16 to open. Accordingly, the power from low power converters 170, 172 and the high power converter 174 flows to charging circuit B 175, which then charges the second battery pack 177 using 24 Amps of current. Charging circuit A 171 and charging circuit C 179 do not receive any power.

When a third high-power configuration is input by a user at the user interface 400, the controller 300 controls switches SW13, SW15, SW16 to close and switches SW12, SW14 to open. Accordingly, the power from the power from low power converters 170, 172 and the high power converter 174 flows to charging circuit C 179, which then charges the third battery pack 181 using 24 Amps of current. Charging circuit A 171 and charging circuit B 175 do not receive any power.

In some embodiments, the switches SW12, SW13, SW14, SW15, SW16 may all be open when the portable power supply 100 is in the off configuration or no battery packs 173, 177, 181 are attached to the portable power supply 100.

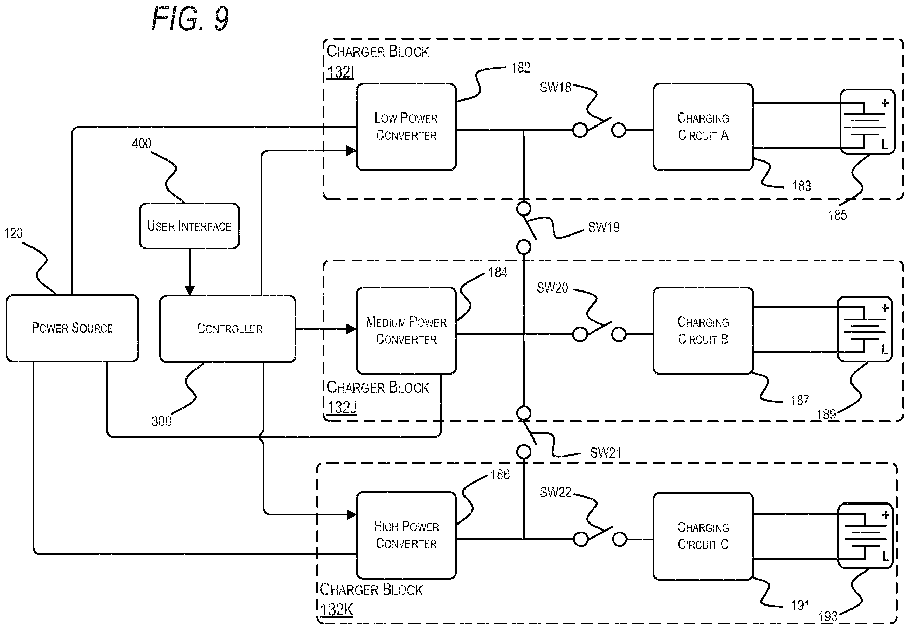

Similar to the schematic diagram of FIG. 8, schematic diagram of FIG. 9 includes three charger blocks 132. The schematic diagram incudes the power source 120, the user interface 400, the controller 300, a ninth charger block 132I, a tenth charger block 132J, an eleventh charger block 132K, and switches SW19, SW20. The ninth charger block 132I includes a low power converter 182, a switch SW18, charging circuit A 183, and battery pack 185. The tenth charger block 132J includes a medium power converter 184, a switch SW20, charging circuit B 187, and battery pack 189. The eleventh charger block 132K includes a high power converter 186, a switch SW22, charging circuit C 191, and battery pack 193. The power source 120 provides power to the converters 182, 284, 186. The converters 182, 284, 186 convert the power output from the power source 120 to a 6 Amp charging current, a 9 Amp charging current, and a 12 Amp charging current, respectively. In some embodiments, the user interface 400 may receive and input indicating that there is no rush in charging battery packs 185, 189, 191, and the controller 300 may sequentially charge the battery packs 185, 189, 191 (e.g., be sequentially enabling each charger block 132) so as to not overload the power source 120.

The switches SW18, SW19, SW20, SW21, SW22 are controlled by the controller 300 based on an input from the user interface 400. The switch SW18 of the ninth charger block 132I may be controlled by the controller 300 to allow charging current to flow from the low power converter 182 to charging circuit A 183, thus, enabling the sixth charger block 132F. The switch SW20 of the tenth charger block 132J may be controlled by the controller 300 to allow charging current to flow from the medium power converter 184 to charging circuit B 187, thus, enabling the tenth charger block 132J. The switch SW22 of the eleventh charger block 132K may be controlled by the controller 300 to allow charging current to flow from the high power converter 186 to charging circuit C 191, thus, enabling the eleventh charger block 132K. Switches SW19, SW21 are integrated into the portable power supply 100 and are also controllable by the controller 300. In some embodiments, the controller 300 may close switches SW19, SW21 when sequential charging of the battery packs 185, 189, 191 is taking place. For example, the user interface 400 may receive an input indicating that there is no rush in charging battery packs 185, 189, 191, and the controller 300 may sequentially charge the battery packs 185, 189, 191 by sequentially enabling the respective charger blocks 132, so as to not overload the power source 120.

In some embodiments, the charger blocks 132 may borrow an output charging current from one another. For example, a user may interact with the user interface 400 to set the charge rate of the charging circuits 183, 187, 191. For example, the user interface 400 may include buttons (e.g., on a screen) that correspond with an off configuration, normal-power configuration for the charging circuits 183, 187, 191, a medium-power circuit for charging circuit A or charging circuit B, and a high-power configuration for any one of the charging circuits 183, 187, 191. Other power configurations may be contemplated. In some embodiments, the controller 300 receives inputs from an external device (e.g., a mobile phone, computer, tablet, etc.) that controls the charge rate of the charging circuits 183, 187, 191.

When a normal-power configuration is input by a user at the user interface 400, the controller 300 controls switches SW18, SW20, SW22 to close and switches SW19, SW21 to open. Accordingly, the power from low power converter 182 flows to charging circuit A 183, which then charges the first battery pack 185 using 6 Amps of current, the power from medium power converter 184 flows to charging circuit B 187, which then charges the second battery pack 177 using 9 Amps of current, and the power from the high power converter 186 flows to charging circuit C 191, which then charges the third battery pack 193 using 12 Amps of current.

When a first medium-power configuration is input by a user at the user interface 400, the controller 300 controls switches SW18, SW19 to close and switches SW20, SW21, SW22 to open. Accordingly, the power from the low power converter 182 and the medium power converter 184 flows to charging circuit A 183, which then charges the first battery pack 185 using 15 Amps of current.

When a second medium-power configuration is input by a user at the user interface 400, the controller 300 control switches SW19, SW20 to close and switches SW18, SW21, SW226 to open. Accordingly, the power from the low power converter 182 and the medium power converter 184 flows to charging circuit B 187, which then charges the second battery pack 189 using 15 Amps of current. During both the first and second medium-power configuration the power from the high power converter 186 may flow to charging circuit C 191 (such that switch SW22 would be closed), which then charges the third battery pack 181 using 12 Amps of current.

When a first high-power configuration is input by a user at the user interface 400, the controller 300 controls switches SW18, SW19, SW21 to close and switches SW20, SW22 to open. Accordingly, the power from low power converter 182, the medium power converter 184, and the high power converter 186 flows to charging circuit A 183, which then charges the first battery pack 185 using 27 Amps of current. Charging circuit B 187 and charging circuit C 191 do not receive any power. In some embodiments, the battery pack receiving 27 Amps of current may be a high-capacity, high-output battery pack that requires 27 Amps of current to be charged.

When a second high-power configuration is input by a user at the user interface 400, the controller 300 controls switches SW19, SW20, SW21 to close and switches SW18, SW22 to open. Accordingly, the power from the low power converter 182, the medium power converter 184, and the high power converter 186 flows to charging circuit B 187, which then charges the second battery pack 189 using 27 Amps of current. Charging circuit A 183 and charging circuit C 191 do not receive any power.

When a third high-power configuration is input by a user at the user interface 400, the controller 300 controls switches SW19, SW21, SW22 to close and switches SW18, SW20 to open. Accordingly, the power from the power from the low power converter 182, the medium power converter 184, and the high power converter 186 flows to charging circuit C 191, which then charges the third battery pack 193 using 27 Amps of current. Charging circuit A 183 and charging circuit B 187 do not receive any power. In some embodiments, the switches SW18, SW19, SW20, SW21, SW22 may all be open when the portable power supply 100 is in the off configuration or no battery packs 185, 189, 193 are attached to the portable power supply 100.

Tables 7-24, below, are examples of the various power output configurations that may be implemented by the portable power supply 100, and more specifically, by the circuit components in the schematic diagrams of FIGS. 8 & 9. In some embodiments, the user interface 400 may include inputs (e.g., buttons, switches, etc.) corresponding to each power output configuration. Switch designations of S_{A}, S_{B}, S_{C}, S_{D}, and S_{E} correspond to switches SW12, SW13, SW14, SW15, and SW16, respectively, or SW18, SW19, SW20, SW21, and SW22, respectively.

**TABLE 7**

| **Output Circuitry** | **Switch Combinations** | | **Battery Packs** | **Power Output** |
|---|---|---|---|---|
| Power Output A | S_{A} | ON | Battery Pack 1 | A |
| | S_{B} | OFF | | |
| | S_{C} | ON | | |
| | S_{D} | OFF | | |
| | S_{E} | ON | | |
| Power Output B | S_{A} | ON | Battery Pack 2 | B |
| | S_{B} | OFF | | |
| | S_{C} | ON | | |
| | S_{D} | OFF | | |
| | S_{E} | ON | | |
| Power Output C | S_{A} | ON | Battery Pack 3 | C |
| | S_{B} | OFF | | |
| | S_{C} | ON | | |
| | S_{D} | OFF | | |
| | S_{E} | ON | | |

**TABLE 8**

| **Output Circuitry** | **Switch Combinations** | | **Battery Packs** | **Power Output** |
|---|---|---|---|---|
| Power Output A | S_{A} | ON | Battery Pack 1 | A |
| | S_{B} | OFF | | |
| | S_{C} | ON | | |
| | S_{D} | ON | | |
| | S_{E} | OFF | | |
| Power Output B | S_{A} | ON | Battery Pack 2 | B+C |
| | S_{B} | OFF | | |
| | S_{C} | ON | | |
| | S_{D} | ON | | |
| | S_{E} | OFF | | |
| Power Output C | S_{A} | ON | Battery Pack 3 | 0 |
| | S_{B} | OFF | | |
| | S_{C} | ON | | |
| | S_{D} | ON | | |
| | S_{E} | OFF | | |

**TABLE 9**

| **Output Circuitry** | **Switch Combinations** | | **Battery Packs** | **Power Output** |
|---|---|---|---|---|
| Power Output A | S_{A} | ON | Battery Pack 1 | A + B |
| | S_{B} | ON | | |
| | S_{C} | OFF | | |
| | S_{D} | OFF | | |
| | S_{E} | ON | | |
| Power Output B | S_{A} | ON | Battery Pack 2 | 0 |
| | S_{B} | ON | | |
| | S_{C} | OFF | | |
| | S_{D} | OFF | | |
| | S_{E} | ON | | |
| Power Output C | S_{A} | ON | Battery Pack 3 | C |
| | S_{B} | ON | | |
| | S_{C} | OFF | | |
| | S_{D} | OFF | | |
| | S_{E} | ON | | |

**TABLE 10**

| **Output Circuitry** | **Switch Combinations** | | **Battery Packs** | **Power Output** |
|---|---|---|---|---|
| Power Output A | S_{A} | OFF | Battery Pack 1 | 0 |
| | S_{B} | ON | | |
| | S_{C} | ON | | |
| | S_{D} | OFF | | |
| | S_{E} | ON | | |
| Power Output B | S_{A} | OFF | Battery Pack 2 | A+B |
| | S_{B} | ON | | |
| | S_{C} | ON | | |
| | S_{D} | OFF | | |
| | S_{E} | ON | | |
| Power Output C | S_{A} | OFF | Battery Pack 3 | C |
| | S_{B} | ON | | |
| | S_{C} | ON | | |
| | S_{D} | OFF | | |
| | S_{E} | ON | | |

**TABLE 11**

| **Output Circuitry** | **Switch Combinations** | | **Battery Packs** | **Power Output** |
|---|---|---|---|---|
| Power Output A | S_{A} | ON | Battery Pack 1 | A |
| | S_{B} | OFF | | |
| | S_{C} | OFF | | |
| | S_{D} | ON | | |
| | S_{E} | ON | | |
| Power Output B | S_{A} | ON | Battery Pack 2 | 0 |
| | S_{B} | OFF | | |
| | S_{C} | OFF | | |
| | S_{D} | ON | | |
| | S_{E} | ON | | |
| Power Output C | S_{A} | ON | Battery Pack 3 | B+C |
| | S_{B} | OFF | | |
| | S_{C} | OFF | | |
| | S_{D} | ON | | |
| | S_{E} | ON | | |

**TABLE 12**

| **Output Circuitry** | **Switch Combinations** | | **Battery Packs** | **Power Output** |
|---|---|---|---|---|
| Power Output A | S_{A} | ON | Battery Pack 1 | A + B + C |
| | S_{B} | ON | | |
| | S_{C} | OFF | | |
| | S_{D} | ON | | |
| | S_{E} | OFF | | |
| Power Output B | S_{A} | ON | Battery Pack 2 | 0 |
| | S_{B} | ON | | |
| | S_{C} | OFF | | |
| | S_{D} | ON | | |
| | S_{E} | OFF | | |
| Power Output C | S_{A} | ON | Battery Pack 3 | 0 |
| | S_{B} | ON | | |
| | S_{C} | OFF | | |
| | S_{D} | ON | | |
| | S_{E} | OFF | | |

**TABLE 13**

| **Output Circuitry** | **Switch Combinations** | | **Battery Packs** | **Power Output** |
|---|---|---|---|---|
| Power Output A | S_{A} | OFF | Battery Pack 1 | 0 |
| | S_{B} | ON | | |
| | S_{C} | ON | | |
| | S_{D} | ON | | |
| | S_{E} | OFF | | |
| Power Output B | S_{A} | OFF | Battery Pack 2 | A+B+C |
| | S_{B} | ON | | |
| | S_{C} | ON | | |
| | S_{D} | ON | | |
| | S_{E} | OFF | | |
| Power Output C | S_{A} | OFF | Battery Pack 3 | 0 |
| | S_{B} | ON | | |
| | S_{C} | ON | | |
| | S_{D} | ON | | |
| | S_{E} | OFF | | |

**TABLE 14**

| **Output Circuitry** | **Switch Combinations** | | **Battery Packs** | **Power Output** |
|---|---|---|---|---|
| Power Output A | S_{A} | OFF | Battery Pack 1 | 0 |
| | S_{B} | ON | | |
| | S_{C} | OFF | | |
| | S_{D} | ON | | |
| | S_{E} | ON | | |
| Power Output B | S_{A} | OFF | Battery Pack 2 | 0 |
| | S_{B} | ON | | |
| | S_{C} | OFF | | |
| | S_{D} | ON | | |
| | S_{E} | ON | | |
| Power Output C | S_{A} | OFF | Battery Pack 3 | A + B + C |
| | S_{B} | ON | | |
| | S_{C} | OFF | | |
| | S_{D} | ON | | |
| | S_{E} | ON | | |

**TABLE 15**

| **Output Circuitry** | **Switch Combinations** | | **Battery Packs** | **Power Output** |
|---|---|---|---|---|
| Power Output A | S_{A} | ON | Battery Pack 1 | A |
| | S_{B} | OFF | | |
| | S_{C} | OFF | | |
| | S_{D} | OFF | | |
| | S_{E} | OFF | | |
| Power Output B | S_{A} | ON | Battery Pack 2 | 0 |
| | S_{B} | OFF | | |
| | S_{C} | OFF | | |
| | S_{D} | OFF | | |
| | S_{E} | OFF | | |
| Power Output C | S_{A} | ON | Battery Pack 3 | 0 |
| | S_{B} | OFF | | |
| | S_{C} | OFF | | |
| | S_{D} | OFF | | |
| | S_{E} | OFF | | |

**TABLE 16**

| **Output Circuitry** | **Switch Combinations** | | **Battery Packs** | **Power Output** |
|---|---|---|---|---|
| Power Output A | S_{A} | OFF | Battery Pack 1 | 0 |
| | S_{B} | OFF | | |
| | S_{C} | ON | | |
| | S_{D} | OFF | | |
| | S_{E} | OFF | | |
| Power Output B | S_{A} | OFF | Battery Pack 2 | B |
| | S_{B} | OFF | | |
| | S_{C} | ON | | |
| | S_{D} | OFF | | |
| | S_{E} | OFF | | |
| Power Output C | S_{A} | OFF | Battery Pack 3 | 0 |
| | S_{B} | OFF | | |
| | S_{C} | ON | | |
| | S_{D} | OFF | | |
| | S_{E} | OFF | | |

**TABLE 17**

| **Output Circuitry** | **Switch Combinations** | | **Battery Packs** | **Power Output** |
|---|---|---|---|---|
| Power Output A | S_{A} | OFF | Battery Pack 1 | 0 |
| | S_{B} | OFF | | |
| | S_{C} | OFF | | |
| | S_{D} | OFF | | |
| | S_{E} | ON | | |
| Power Output B | S_{A} | OFF | Battery Pack 2 | 0 |
| | S_{B} | OFF | | |
| | S_{C} | OFF | | |
| | S_{D} | OFF | | |
| | S_{E} | ON | | |
| Power Output C | S_{A} | OFF | Battery Pack 3 | C |
| | S_{B} | OFF | | |
| | S_{C} | OFF | | |
| | S_{D} | OFF | | |
| | S_{E} | ON | | |

**TABLE 18**

| **Output Circuitry** | **Switch Combinations** | | **Battery Packs** | **Power Output** |
|---|---|---|---|---|
| Power Output A | S_{A} | ON | Battery Pack 1 | A |
| | S_{B} | OFF | | |
| | S_{C} | ON | | |
| | S_{D} | OFF | | |
| | S_{E} | OFF | | |
| Power Output B | S_{A} | ON | Battery Pack 2 | B |
| | S_{B} | OFF | | |
| | S_{C} | ON | | |
| | S_{D} | OFF | | |
| | S_{E} | OFF | | |
| Power Output C | S_{A} | ON | Battery Pack 3 | 0 |
| | S_{B} | OFF | | |
| | S_{C} | ON | | |
| | S_{D} | OFF | | |
| | S_{E} | OFF | | |

**TABLE 19**

| **Output Circuitry** | **Switch Combinations** | | **Battery Packs** | **Power Output** |
|---|---|---|---|---|
| Power Output A | S_{A} | OFF | Battery Pack 1 | 0 |
| | S_{B} | OFF | | |
| | S_{C} | ON | | |
| | S_{D} | OFF | | |
| | S_{E} | ON | | |
| Power Output B | S_{A} | OFF | Battery Pack 2 | B |
| | S_{B} | OFF | | |
| | S_{C} | ON | | |
| | S_{D} | OFF | | |
| | S_{E} | ON | | |
| Power Output C | S_{A} | OFF | Battery Pack 3 | C |
| | S_{B} | OFF | | |
| | S_{C} | ON | | |
| | S_{D} | OFF | | |
| | S_{E} | ON | | |

**TABLE 20**

| **Output Circuitry** | **Switch Combinations** | | **Battery Packs** | **Power Output** |
|---|---|---|---|---|
| Power Output A | S_{A} | ON | Battery Pack 1 | A |
| | S_{B} | OFF | | |
| | S_{C} | OFF | | |
| | S_{D} | OFF | | |
| | S_{E} | ON | | |
| Power Output B | S_{A} | ON | Battery Pack 2 | 0 |
| | S_{B} | OFF | | |
| | S_{C} | OFF | | |
| | S_{D} | OFF | | |
| | S_{E} | ON | | |
| Power Output C | S_{A} | ON | Battery Pack 3 | C |
| | S_{B} | OFF | | |
| | S_{C} | OFF | | |
| | S_{D} | OFF | | |
| | S_{E} | ON | | |

**TABLE 21**

| **Output Circuitry** | **Switch Combinations** | | **Battery Packs** | **Power Output** |
|---|---|---|---|---|
| Power Output A | S_{A} | OFF | Battery Pack 1 | 0 |
| | S_{B} | OFF | | |
| | S_{C} | OFF | | |
| | S_{D} | OFF | | |
| | S_{E} | OFF | | |
| Power Output B | S_{A} | OFF | Battery Pack 2 | 0 |
| | S_{B} | OFF | | |
| | S_{C} | OFF | | |
| | S_{D} | OFF | | |
| | S_{E} | OFF | | |
| Power Output C | S_{A} | OFF | Battery Pack 3 | 0 |
| | S_{B} | OFF | | |
| | S_{C} | OFF | | |
| | S_{D} | OFF | | |
| | S_{E} | OFF | | |

FIG. 10 illustrates a schematic diagram of the fourth modular charger block 134. The fourth charger block 134 includes a USB C converter 195, a USB A converter 196, a controller 197, and charging ports 198, 199. The power source 120 provides power to a converter 194 within the power supply 100 and the converter provides a set voltage amount to the USB C converter 195 and the USB A converter 196. In some embodiments, the power source 120 provides 24 V to the converter 194. In some embodiments, the converter 194 is an LLC converter. For example, the LLC converter may include two inductors, a capacitor, and a transformer. The converter 194 scales the input power received from the power source 120 to usable power by the USB C converter 195 and the USB A converter 196. In some embodiments, the USB C converter 195 is a 60 Watt converter. For example, the converter 194 may provide 24 V total to the USB C converter 195 and the USB A converter 196.

The USB C converter 195 and the USB A converter 196 deliver charging voltages to the charging ports 198, 199. In some embodiments, the USB C converter 195 provides a range of 3.3 V to 21 V to the first charging port 198. In some embodiments, the USB A converter 196 provides 5 V at 2.4 Amps of current to the second charging port 199. Devices may be electrically connected to the charging ports 198, 199 via power cords that are inserted at one end in the charging ports 198, 199. The controller 154 may communicate with a CAN bus to share status information with the power supply 100 and to receive mode commands.

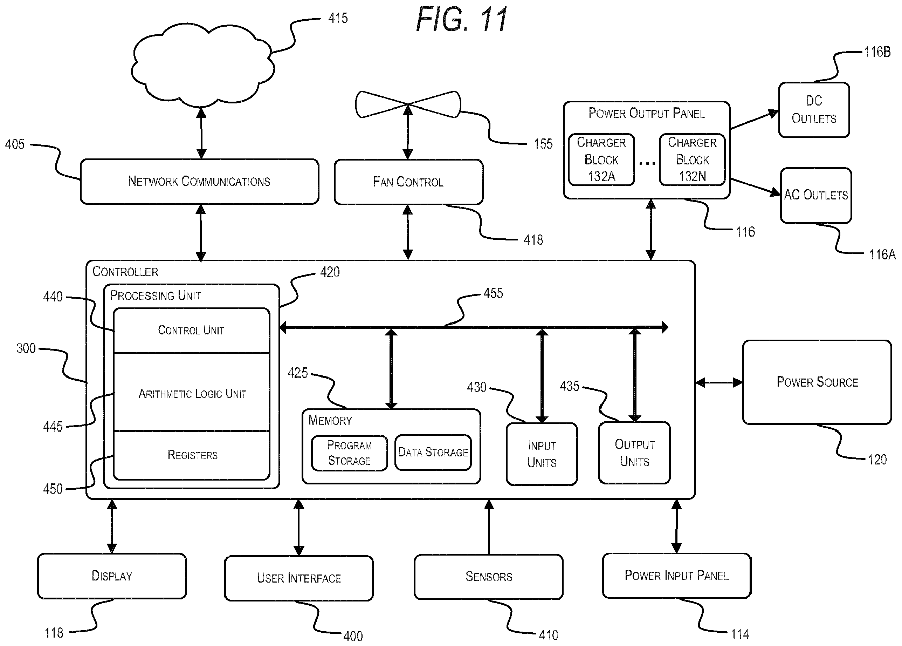

FIG. 11 is a schematic illustration of the controller 300 of the power supply 100. The controller 300 is electrically and/or communicatively connected to a variety of modules or components of the power supply 100. For example, the illustrated controller 300 is connected to the power input unit 114, the power output unit 116, the display 118, and the internal power source 120. Persons skilled in the art will recognize that electrical and/or communicative connection between the controller 300 and the internal power source 120 includes electrical and/or communicative connection between the controller 300 and components of subcore module 125A, such as, but not limited to, the stack of battery cells 126A and/or subcore monitoring circuit 127A. In some embodiments, the controller 300 communicates with the subcore modules and charger blocks using a control area network ("CAN") bus protocol.

The controller 300 is additionally electrically and/or communicatively connected to a user interface 400, a network communications module 405, a plurality of sensors 410, and a fan control 418. The network communications module 405 is connected to a network 415 to enable the controller 300 to communicate with peripheral devices in the network, such as a smartphone or a server. The sensors 410 include, for example, one or more voltage sensors, one or more current sensors, one or more temperature sensors, etc. Each of the sensors 410 generates one or more output signals that are provided to the controller 300 for processing and evaluation. The user interface 400 is included to provide user control of the power supply 100. The user interface 400 can include any combination of digital and analog input devices required to achieve a desired level of control for the power supply 100. For example, the user interface 400 may include a plurality of knobs, a plurality of dials, a plurality of switches, a plurality of buttons, or the like. In some embodiments, the user interface 400 is integrated with the display 118 (e.g., as a touchscreen display). The fan control 418 operates the fan 155.

The controller 300 includes combinations of hardware and software that are operable to, among other things, control the operation of the power supply 100, communicate over the network 415, receive input from a user via the user interface 400, provide information to a user via the display 118, etc. For example, the controller 300 includes, among other things, a processing unit 420 (e.g., a microprocessor, a microcontroller, an electronic processor, an electronic controller, or another suitable programmable device), a memory 425, input units 430, and output units 435. The processing unit 420 includes, among other things, a control unit 440, an arithmetic logic unit ("ALU") 445, and a plurality of registers 450 (shown as a group of registers in FIG. 10), and is implemented using a known computer architecture (e.g., a modified Harvard architecture, a von Neumann architecture, etc.). The processing unit 420, the memory 425, the input units 430, and the output units 435, as well as the various modules or circuits connected to the controller 300 are connected by one or more control and/or data buses (e.g., common bus 455). The control and/or data buses are shown generally in FIG. 11 for illustrative purposes. Although the controller 300 is illustrated in FIG. 11 as one controller, the controller 300 could also include multiple controllers configured to work together to achieve a desired level of control for the power supply 100. As such, any control functions and processes described herein with respect to the controller 300 could also be performed by two or more controllers functioning in a distributed manner.

The memory 425 is a non-transitory computer readable medium and includes, for example, a program storage area and a data storage area. The program storage area and the data storage area can include combinations of different types of memory, such as a read only memory ("ROM"), a random access memory ("RAM") (e.g., dynamic RAM ["DRAM'], synchronous DRAM ["SDRAM"], etc.), electrically-erasable programmable ROM ("EEPROM"), flash memory, a hard disk, an SD card, or other suitable magnetic, optical, physical, or electronic memory devices. The processing unit 420 is connected to the memory 425 and is configured to execute software instructions that are capable of being stored in a RAM of the memory 425 (e.g., during execution), a ROM of the memory 425 (e.g., on a generally permanent basis), or another non-transitory computer readable medium such as another memory or a disc. Software included in the implementation of the power supply 100 and controller 300 can be stored in the memory 425 of the controller 300. The software includes, for example, firmware, one or more applications, program data, filters, rules, one or more program modules, and other executable instructions. The controller 300 is configured to retrieve from the memory 425 and execute, among other things, instructions related to the control processes and methods described herein. In other embodiments, the controller 300 includes additional, fewer, or different components.

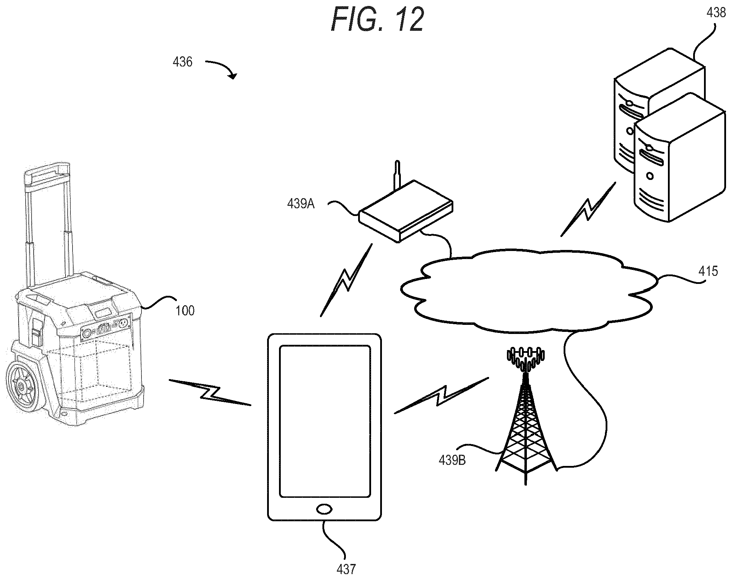

FIG. 12 is a communication system 436 for the portable power supply 100 of FIG. 1. The communication system 436 includes at least one power supply 100 and an external device 437. Each power supply 100 and the external device 437 can communicate wirelessly while they are within a communication range of each other. Each power supply 100 may communicate power supply status, power supply operation statistics, power supply identification, power supply sensor data, stored power supply usage information, power supply maintenance data, and the like.

Using the external device 437, a user can access the parameters of the power supply 100. With the parameters (e.g., power supply operational data or settings), a user can determine how the power supply 100 has been used, whether maintenance is recommended or has been performed in the past, and identify malfunctioning components or other reasons for certain performance issues. The external device 437 can also transmit data to the power supply 100 for power supply configuration, firmware updates, or to send commands. The external device 437 also allows a user to set operational parameters, safety parameters, operating modes, and the like for the power supply 100.

The external device 437 is, for example, a smart phone (as illustrated), a laptop computer, a tablet computer, a personal digital assistant (PDA), or another electronic device capable of communicating wirelessly with the power supply 100 and providing a user interface. The external device 437 provides the user interface and allows a user to access and interact with the power supply 100. The external device 437 can receive user inputs to determine operational parameters, enable or disable features, and the like. The user interface of the external device 437 provides an easy-to-use interface for the user to control and customize operation of the power supply 100. The external device 437, therefore, grants the user access to the power supply operational data of the power supply 100, and provides a user interface such that the user can interact with the controller 300 of the power supply 100.

In addition, as shown in FIG. 12, the external device 437 can also share the power supply operational data obtained from the power supply 100 with a remote server 438 connected through a network 415. The remote server 438 may be used to store the tool operational data obtained from the external device 437, provide additional functionality and services to the user, or a combination thereof. In some embodiments, storing the information on the remote server 438 allows a user to access the information from a plurality of different locations. In some embodiments, the remote server 438 collects information from various users regarding their power supplies and provide statistics or statistical measures to the user based on information obtained from the different power supplies. For example, the remote server 438 may provide statistics regarding the experienced efficiency of the power supply 100, typical usage of the power supply 100, and other relevant characteristics and/or measures of the power supply 100. The network 415 may include various networking elements (routers 439A, hubs, switches, cellular towers 439B, wired connections, wireless connections, etc.) for connecting to, for example, the Internet, a cellular data network, a local network, or a combination thereof, as previously described. In some embodiments, the power supply 100 is configured to communicate directly with the remote server 438 through an additional wireless interface or with the same wireless interface that the power supply 100 uses to communicate with the external device 437.

In some embodiments, the power supply 100 is configured to provide output power (e.g., from the internal power source 120) until the internal power source 120 reaches a low-voltage cutoff threshold. In embodiments where the power supply 100 received removable and rechargeable battery packs, the battery packs that are used to provide output power from the power supply 100 can be similarly discharged until reaching low-voltage cutoff thresholds. A user can also program the power supply 100 or select an operating mode of the power supply 100 such that the power supply 100 shuts off (e.g., stops outputting power to the power output unit 116) before the power supply 100 or a connected battery pack reaches a low-voltage cutoff threshold. For example, using the external device 437, the user can enable a power down timer of the controller 300. The user is able to enable the power down timer such that, if output power from the power supply 100 is below a threshold (e.g., a power threshold, a current threshold, etc.) for a selected interval of time (e.g., one hour, two hours, six hours, twelve hours, etc.), the output of the power supply 100 is disabled. The user can set the threshold value and the interval of time using the external device 437. As an example, a user can set a power threshold value of 80 Watts and a timer interval of one hour. If the power supply 100 is not outputting 80 Watts of power for one hour, the power supply 100 turns off. In some embodiments, the timer is used as an energy saving feature. Rather than powering relatively low-powered devices for an extended period of time, power is preserved for higher power application (e.g., corded power tools). When the power down timer is not enabled, the power supply 100 will not shut off until a low-voltage cutoff threshold is reached and lower powered devices can be powered until the low-voltage cutoff is reached.

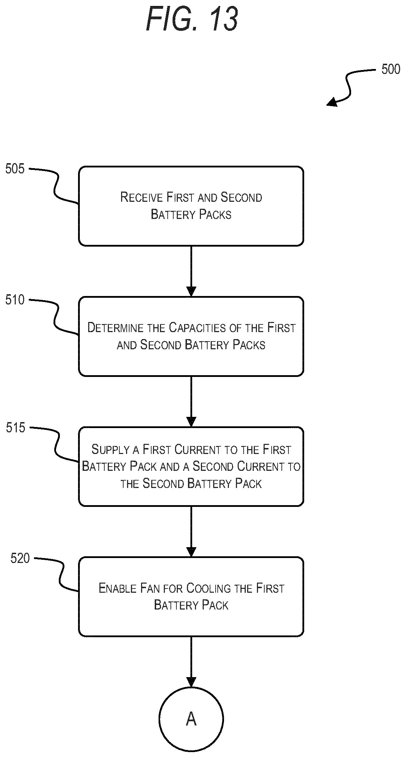

FIGS. 13-14 are a process 500 for providing various charging currents to battery packs 200 that are coupled to the power supply 100. The process 500 begins with the power supply 100 receiving a first battery pack and a second battery pack (Block 505). For example, the first battery pack may be coupled to charging port 142A of the first charger block 132A and the second battery pack may be coupled to charging port 144A of the second charger block 132B. In some embodiments, the controller 300 determines that the battery packs 200 have been received by the respective charging ports 142A, 144A by at least one of sensing a current of the battery packs, sensing a voltage of the battery packs, a mechanical switch in the charging ports 142A, 144A, communication with the battery packs, etc.

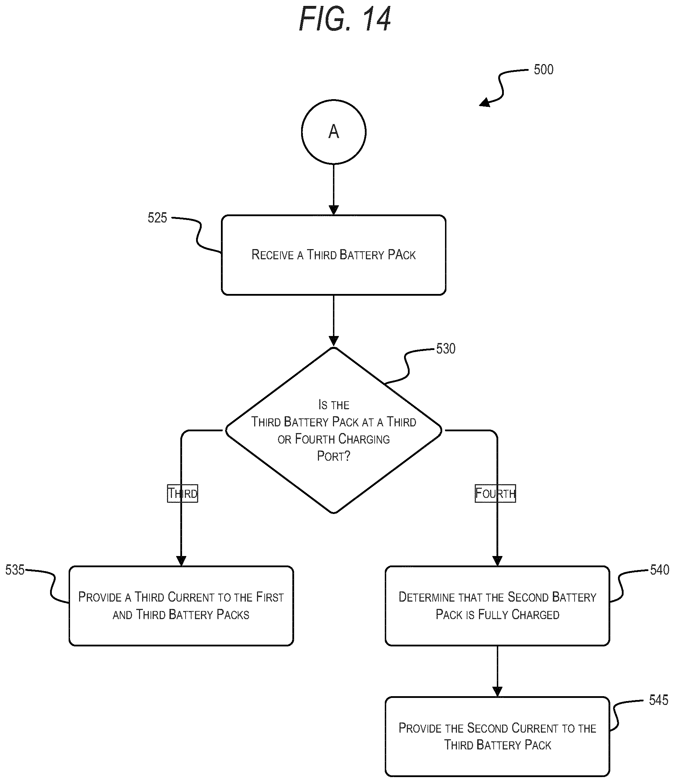

At block 510, the controller 300 determines characteristics of the first and second battery packs, such as the charge capacities of the first and second battery packs. For example, the controller 300 may communicate with a controller of the battery packs 200 to determine their charge capacities. At block 515, the power supply 100 supplies a first current to the first battery pack and a second current to the second battery pack. For example, the charging port 142A of the first charger block 132A may output 18 Amps of charging current to the first battery pack, and the charging port 144A of the second charger block 132B may output 6 Amps of charging current to the second battery pack. At block 520, the fan 155 is enabled for cooling the first battery pack. In some embodiments, the controller 154 of the first charger block 132A controls the operation of the fan when charging current is output to the first battery pack. The process 500 continues to block 525 (FIG. 14).

At block 525, the power supply 100 receives a third battery pack. At decision block 530, the controller 300 determines whether the third battery pack is at a third charging port or a fourth charging port. In some embodiments, the third charging port is charging port 142B of the first charger block 132A. In some embodiments, the fourth charging port is charging port 144B of the second charger block 132B. The controller 300 may determine the location of the third battery pack based on at least one of sensing a current of the battery pack, sensing a voltage of the battery pack, a mechanical switch in the charging ports 142B, 144B, communication with the battery pack, etc. When the controller 300 determines that the third battery pack is coupled to the third charging port 142B, the process 500 continues to block 535. When the controller 300 determines that the third battery pack is coupled to the fourth charging port 144B, the process continues to block 540.

At block 535, the power supply 100 supplies a third current to the first battery pack and the third battery pack. In some embodiments, the third current may be one of a 6 Amp charging current or a 9 Amp charging current. The first battery pack coupled to the first charging port 142A and the third battery pack coupled to the third charging port 142B simultaneously receive the charging current. For example, the first battery pack coupled to the first charging port 142A and the third battery pack coupled to the third charging port 142B may simultaneously receive the 9 Amps of charging current. In some embodiments, the controller 154 of the first charger block 132A determines what the third current is based on the ratings of the battery packs. In some embodiments, the first battery pack and the second battery pack may receive different charging currents from one another. For example, the first battery pack may receive 12 Amps from the first charging port 142A and the third battery pack may receive 9 Amps from the third charging port 142B.

At block 540, the second battery pack is determined to be fully charged. In some embodiments, the controller 160 of the second charger block 132B may determine that the second battery pack is fully charged based on communication with the battery pack. At block 545, the second charging current is supplied to the third battery pack. In some embodiments, the controller 160 of the second charger block 132B operates switch SW5 to open and switches SW6, SW7 to close immediately upon receipt of the second battery pack being fully charged. For example, the third battery pack receives 6 Amps of charging current from the fourth charging port 144B.

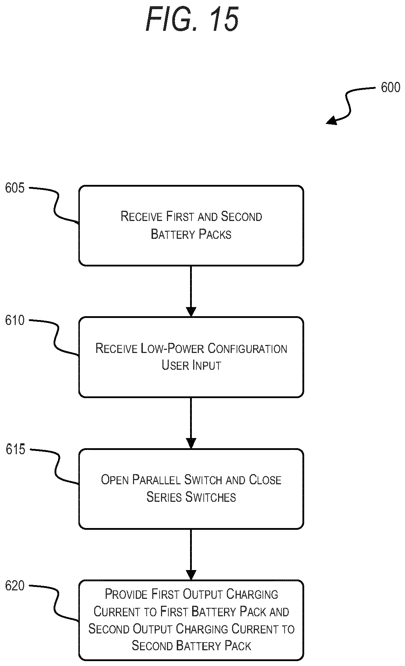

FIG. 15 is a process 600 for providing a normal-power charging current to the battery packs 165, 169 of the schematic diagram of FIG. 7. The process 600 begins with the power supply 100 receiving the first battery pack 165 and the second battery pack 169 (Block 605). In some embodiments, the controller 300 determines that the battery packs 165, 169 have been received by the power supply 100 by at least one of sensing a current of the battery packs, sensing a voltage of the battery packs, a mechanical switch in the battery pack interfaces, communication with the battery packs, etc. At block 610, the controller 300 receives a normal-power configuration user input. In some embodiments, the user input is received from a user interacting with the user interface 400. Alternatively or additionally, in some embodiments, the user input is received from an external device (e.g., a smart phone).

At block 615, the controller 300 opens the parallel switch (e.g., SW10 in schematic diagram of FIG. 7) and closes the series switches (e.g., switches SW9, SW11 in schematic diagram of FIG. 7) of the charger blocks 132D, 132E. The switches may be mechanical switches, transistors, etc. A first output charging current is provided to the first battery pack 165 and a second output charging current is provided to the second battery pack 169 (Block 620). In some embodiments, the first output charging current may be less than the second output charging current. For example, the first output charging current may be 6 Amps, and the second output charging current may be 12 Amps. In some embodiments, the first and second output charging currents may be the same.

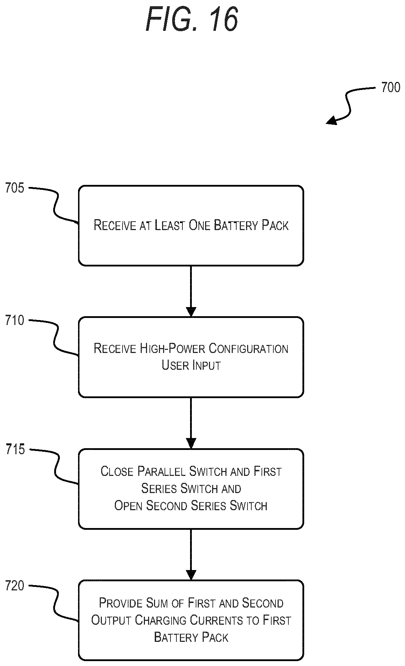

FIG. 16 is a process 700 for providing a high-power charging current to one of the first battery pack 165 and the second battery pack 169 of the schematic diagram of FIG. 7. The process 700 begins with the power supply 100 receiving at least one of the first battery pack 165 and the second battery pack 169 (Block 705). In some embodiments, the controller 300 determines that the battery packs 165, 169 have been received by the power supply 100 by at least one of sensing a current of the battery packs, sensing a voltage of the battery packs, a mechanical switch in the battery pack interfaces, communication with the battery packs, etc. At block 710, the controller 300 receives a high-power configuration user input. In some embodiments, the user input is received from a user interacting with the user interface 400. Alternatively or additionally, in some embodiments, the user input is received from an external device (e.g., a smart phone).

At block 715, the controller 300 closes the parallel switch and the first series switch (e.g., switches SW10, SW9 in schematic diagram of FIG. 7) and opens the second series switch (e.g., switch SW11 in schematic diagram of FIG. 7). In some embodiments, based on the user input, the controller 300 closes the parallel switch and the second series switch (e.g., switches SW10, SW11 in schematic diagram of FIG. 7) and opens the first series switch (e.g., switch SW9 in schematic diagram of FIG. 7). The switches may be mechanical switches, transistors, etc. The sum of the first and second output charging currents is provided to the first battery pack 165 (Block 720). The second battery pack 169 does not receive any charging current. In the high-power configuration, a single battery pack is charged using both output charging currents from the respective charger blocks 132D, 132E, such that the single battery pack may be charged more quickly.

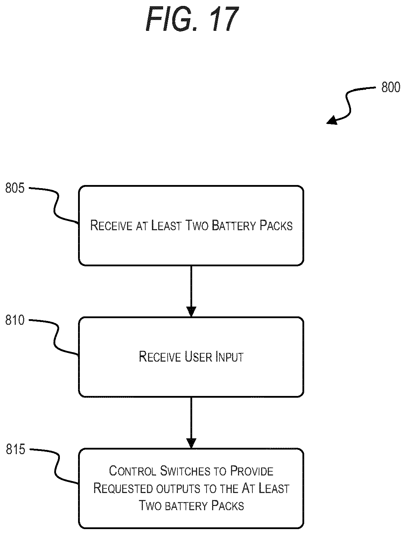

FIG. 17 is a process 800 for providing a requested charging current to at least two battery packs of the schematic diagrams of FIGS. 7-9. The process 800 begins with the power supply 100 receiving at least two battery packs (Block 805). In some embodiments, the controller 300 determines that at least two battery packs have been received by the power supply 100 by at least one of sensing a current of the battery packs, sensing a voltage of the battery packs, a mechanical switch in the battery pack interfaces, communication with the battery packs, etc. At block 810, the controller 300 receives a user input. In some embodiments, the user input may be one of a normal-power configuration, a medium-power configuration, or a high-power configuration. For example, the user input may correspond to any one of the power output configurations illustrated by Tables 1-21. In some embodiments, Block 810 may be skipped, and the controller 300 automatically controls the switches to provide power to the at least two battery packs. For example, based on at least one of a sensed or received power rating of the at least two battery packs and a charge level of the at least two battery packs, the controller 300 may control the switches to provide power to the battery packs.

At block 815, the controller 300 controls the switches to provide the requested power outputs to the at least two battery packs. The switches may be mechanical switches, transistors, etc. Based on the configuration of open and closed switches, the charging currents output to the at least two battery packs corresponds to the user input.

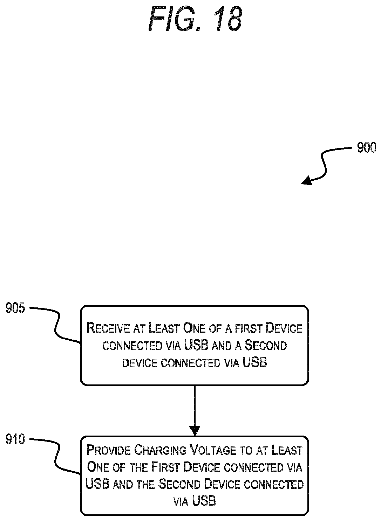

FIG. 18 is a process 900 for providing charging voltage to at least one of a first device connected to a first USB port and a second device connected to a second USB port of the schematic diagram of FIG. 10. The process 900 begins with the power supply 100 receiving at least one of a first device connected via USB and a second device connected via USB (Block 905). In some embodiments, the controller 300 determines that at least one of the first device and the second device is connected via USB by at least one of sensing a current of the device, sensing a voltage of the device, a mechanical switch in the charging port, communication with the device, etc. In some embodiments, the first device is connected via USB C and the second device is connected via USB A. At block 910, the controller 300 provides charging voltage to at least one of the first device connected via USB and the second device connected via USB. The controller 300 may provide between 3.3 V and 21 V to a first USB port 198 that the first device is connected via and 5 V to a second USB port 199 that the second device is connected via.

Although the blocks of processes 600, 700, 800, 900 are illustrated serially and in a particular order in FIGS. 15, 16, 17, and 18 in some embodiments, one or more of the blocks are implemented in parallel, are implemented in a different order than shown, or are bypassed.

### REPRESENTATIVE FEATURES

Representative features are set out in the following clauses, which stand alone or may be combined, in any combination, with one or more features disclosed in the text and/or drawings of the specification.
1. A portable power supply comprising:
   a battery core including a plurality of battery cells;
   a first modular charger block received in a first charging slot and connected to a first charging port;
   a second modular charger block received in a second charging slot and connected to a second charging port; and
   a controller including an electronic processor, the controller configured to:
      determine that a first battery pack is received by the first charging port,
      determine that a device is received by the second charging port,
      determine a first characteristic of the first battery pack, and
      provide a first current to the first battery pack based on the first characteristic and a second current to the device based on the device being received by the second charging port.
2. The portable power supply of clause 1, wherein the controller is further configured to:
   enable a fan configured to cool the first charging port, wherein the fan is integrated into the first modular charger block.
3. The portable power supply of clause 1 or 2, wherein the controller is further configured to:
   determine that a second device is received by a third charging port; and
   provide, in response to determining that the second device is received by the third charging port, a third current to the second device.
4. The portable power supply of any preceding clause, wherein the first modular charger block includes a first power buck and a second power buck.
5. The portable power supply of clause 4, wherein the first power buck is capable of providing 18 amps of current to the first charging port.
6. The portable power supply of any preceding clause, wherein the second modular charger block includes a first power buck and a second power buck.
7. The portable power supply of clause 6, wherein the first power buck provides between 3.3 volts (V) and 21 V to the second charging port and the second power buck provides 5 V to a third charging port.
8. The portable power supply of any preceding clause, wherein the second charging port is USB-C charging port and a third charging port is a USB-A charging port.
9. The portable power supply of any preceding clause, wherein the first characteristic is a charge capacity of the first battery pack.
10. The portable power supply of any preceding clause, wherein the device is one of a mobile phone, a tablet, a power tool, a battery pack, and a battery pack charger.
11. A method for providing power from a battery core of a portable power supply, the method comprising:
   determining, with an electronic processor of the portable power supply, that a first battery pack is received by a first charging port of a first modular charger included in the portable power supply,
   determining, with the electronic processor of the portable power supply, that a first device is received by a second charging port of a second modular charger included in the portable power supply,
   determining, with the electronic processor of the portable power supply, a first characteristic of the first battery pack, and
   providing, with the electronic processor of the portable power supply, a first current to the first battery pack based on the first characteristic and a second current to the first device based on the first device being received by the second charging port.
12. The method of clause 11 further comprising:
   determining, with the electronic processor of the portable power supply, that a second device is received by a third charging port of the second modular charger included in the portable power supply, and
   providing, with the electronic processor of the portable power supply, a third current to the second device.
13. The method of clause 12, wherein the second device is a second battery pack.
14. The method of clause 12, wherein the third current is less than the first current.
15. The method of any of clauses 11-14 further comprising:
   determining, with the electronic processor of the portable power supply, that a second device is received by a third charging port of the second modular charger included in the portable power supply,
   determining, with the electronic processor of the portable power supply, that the first device is fully charged, and
   providing, with the electronic processor of the portable power supply, the second current to the second device.
16. The method of clause 15, wherein the first device and the second device are battery packs.
17. A system comprising:
   a first device;
   a second device; and
   a portable power supply including:
      a battery core including a plurality of battery cells;
      a user interface;
      a first modular charger block received in a first charging slot and connected to a first charging port;
      a second modular charger block received in a second charging slot and connected to a second charging port; and
      a controller including an electronic processor configured to:
         determine that the first device is received by the first charging port,
         determine that the second device is received by the second charging port,
         receive an input from the user interface, and
         provide a first current to the first device and a second current to the second device based on the input.
18. The system of clause 17, wherein the input is one of a low-power input and a high-power input.
19. The system of clause 18, wherein, when the input is the low-power input, the first current is provided from the first modular charger block and the second current is provided from the second modular charger block.
20. The system of clause 18, wherein, when the input is the high-power input, the first current is a sum of currents provided from the first modular charger block and the second modular charger block.

Thus, embodiments described herein provide, among other things, systems and methods for providing power to battery packs coupled to a portable power supply via customizable modular charging blocks.

## Claims

1. A portable power supply comprising:
a battery core including a plurality of battery cells;
a first modular charger block received in a first charging slot and connected to a first charging port;
a second modular charger block received in a second charging slot and connected to a second charging port; and
a controller including an electronic processor, the controller configured to:
determine that a first battery pack is received by the first charging port,
determine that a device is received by the second charging port,
determine a first characteristic of the first battery pack, and
provide a first current to the first battery pack based on the first characteristic and a second current to the device based on the device being received by the second charging port.

2. The portable power supply of claim 1, wherein the controller is further configured to:
enable a fan configured to cool the first charging port, wherein the fan is integrated into the first modular charger block.

3. The portable power supply of claim 1, wherein the controller is further configured to:
determine that a second device is received by a third charging port; and
provide, in response to determining that the second device is received by the third charging port, a third current to the second device.

4. The portable power supply of claim 1, wherein the first modular charger block includes a first power buck and a second power buck.

5. The portable power supply of claim 4, wherein the first power buck is capable of providing 18 amps of current to the first charging port.

6. The portable power supply of claim 1, wherein the second modular charger block includes a first power buck and a second power buck.

7. The portable power supply of claim 6, wherein the first power buck provides between 3.3 volts (V) and 21 V to the second charging port and the second power buck provides 5 V to a third charging port.

8. The portable power supply of claim 1, wherein the second charging port is USB-C charging port and a third charging port is a USB-A charging port.

9. The portable power supply of claim 1, wherein the first characteristic is a charge capacity of the first battery pack.

10. The portable power supply of claim 1, wherein the device is one of a mobile phone, a tablet, a power tool, a battery pack, and a battery pack charger.

11. A method for providing power from a battery core of a portable power supply, the method comprising:
determining, with an electronic processor of the portable power supply, that a first battery pack is received by a first charging port of a first modular charger included in the portable power supply,
determining, with the electronic processor of the portable power supply, that a first device is received by a second charging port of a second modular charger included in the portable power supply,
determining, with the electronic processor of the portable power supply, a first characteristic of the first battery pack, and
providing, with the electronic processor of the portable power supply, a first current to the first battery pack based on the first characteristic and a second current to the first device based on the first device being received by the second charging port.

12. The method of claim 11 further comprising:
determining, with the electronic processor of the portable power supply, that a second device is received by a third charging port of the second modular charger included in the portable power supply, and
providing, with the electronic processor of the portable power supply, a third current to the second device.

13. The method of claim 12, wherein the second device is a second battery pack, or optionally,
wherein the third current is less than the first current.

14. The method of claim 11 further comprising:
determining, with the electronic processor of the portable power supply, that a second device is received by a third charging port of the second modular charger included in the portable power supply,
determining, with the electronic processor of the portable power supply, that the first device is fully charged, and
providing, with the electronic processor of the portable power supply, the second current to the second device.

15. The method of claim 14, wherein the first device and the second device are battery packs.
